# EUROPÄISCHE PATENTANMELDUNG

(11) **EP 2 042 822 A2**
(43) Veröffentlichungstag der Anmeldung: **01.04.2009**
(21) Anmeldenummer: 08016859.4
(22) Anmeldetag: 25.09.2008
(51) Int. Cl.: F24J 2/04, F24J 2/52

(54) **Solarenergie-Komplettsystem**

(30) Priorität: 25.09.2007 DE 102007045889; 25.10.2007 DE 102007050977; 11.01.2008 DE 102008004179
(71) Anmelder: Metzger, Herbert H. W., 67112 Mutterstadt (DE)
(72) Erfinder: Metzger, Herbert H. W., 67112 Mutterstadt (DE)
(74) Vertreter: Henrion, Oliver

(57) **Zusammenfassung**

Die vorliegende Erfindung bezieht sich auf ein Solarenergie-Komplettsystem, das geeignet ist, auf einem Dach (1) angeordnet zu werden. Es hat mit einer Vielzahl von in Solarmodulrahmen (10a,310a) eingefasste Solarmodule (2) und einer Haltekonstruktion für die Solarmodule (2) auf dem Dach, wobei die Solarmodulrahmen (310a,10a) auf der Haltekonstruktion angeordnet sind. Die Haltekonstruktion weist eine Vielzahl von Hohlprofilen (8,8') mit zumindest einem seitlich angeformten Flansch (12,320) auf, wobei auf der Dachhaut (1') zumindest eine erste Schicht Folienmaterial angebracht ist, die mit zumindest einer zweiten, über den Hohlprofilen (8,8') angeordneten Schicht Folienmaterial adhäsiv, chemisch oder photochemisch verbunden ist. Dadurch werden die Hohlprofile (8,8') auf dem Dach (1) ortsfest positioniert. Die Hohlprofile (8,8') sind auf einer Dachhaut (1') des Daches (1) im Wesentlichen parallel und in einem solchen Abstand zueinander angeordnet, dass die Solarmodule (2) dichtend auf der Haltekonstruktion über zwei benachbarten HohlProfilen (8,8') aufliegen und befestigt sind. Zumindest ein Abluft-/Zuluftkanal (4,316) ist auf dem Dach (1), insbesondere auf dem Dachfirst, angeordnet und eine Vielzahl von Kanälen (13) wird zumindest von jeweils einer Seitenwand zweier benachbarter Hohlprofile (8,8') und den darüber dichtend aneinander grenzend getragenen Solarmodulen (2) mit Solarmodulrahmen (310a,10a) auf dem Dach (1) und durch die Dachhaut (1') gebildet. Die Kanäle (13) und die Hohlprofile (8,8') erstrecken sich in den Abluft-/Zuluftkanal (4,316) hinein. Eine Vorrichtung zur Abluftabsaugung und/oder zur Zuluftversorgung ist an dem Abluft-/Zuluftkanal (4,316) angeordnet, die geeignet ist, Luft aus den Kanälen (13) abzusaugen oder zuzuführen.

## Beschreibung

Die nachfolgende Erfindung bezieht sich auf ein Solarenergie-Komplettsystem, insbesondere auf ein Solarenergie-Komplettsystem, das eine Solarmodul-Anordnung auf einem Gebäudedach, insbesondere auf einem Flachdach, betrifft.

### STAND DER TECHNIK

Aus dem Stand der Technik sind zahlreiche Systeme bekannt, die dazu dienen, entweder elektrische Energie oder Warmluft-Energie aus Sonneneinstrahlung zu gewinnen. Bekannte Photovoltaiksysteme werden dabei entweder flach auf Gebäudedächem oder an Hauswänden installiert, ebenso ist es möglich, auf Aufständerungssystemen Photovoltaiksysteme oder entsprechend Solarmodule mittels Aufständerungselementen auf Flachdächern mit einer Neigung bis meistens 30° Grad anzuordnen. Dächer mit einer Dachneigung beziehungsweise Dächer, auf denen eine Neigung bereitgestellt ist, werden dabei zumeist großflächig mit Solarmodulen bestückt. Die Solarmodule werden sinnvoll derart ausgerichtet oder nahezu flach auf dem Gebäudedach montiert, dass eine optimale Sonneneinstrahlung gewährleistet ist. Die Solarmodule werden daher während der Sonneneinstrahlung stark aufgeheizt. Auch die Luft, die unter den Solarmodulen beziehungsweise in Zwischenräumen zwischen mehreren Solarmodulen steht, heizt sich auf, ebenfalls das Material, aus dem das Dach selbst besteht. Es kommt zu Stauwärme und gegebenenfalls zu Überhitzung der Solarmodule. Der Wirkungsgrad der Solarmodule kann durch Überhitzung der Solarmodule und gegebenenfalls Schädigung derselben herabgesetzt werden.

Um Solarmodule an Gebäudedächern oder an Hauswänden anzuordnen, wird üblicherweise auf dem Gebäudedach oder an der Wand eine Metall-Unterkonstruktion bereitgestellt, die zumeist erfordert, dass die Dachhaut durchdrungen wird. Auf diese Metall-Unterkonstruktion wird entsprechend eine gekonterte, zweite Unterkonstruktion angeordnet, die geeignet ist, um die Solarmodule zu tragen. Solche Systeme werden beispielsweise in "Solare Luftheizsysteme", Ökobuch, 1. Auflage 2005, Ökobuch-Verlag Staufen bei Freiburg 2005, Seite 144 ff., beschrieben. Die Anordnung der Unterkonstruktion zum Tragen der Solarmodule erfordert häufig aufwändige Abdichtung, vor allem um die Dachhaut des Flachdaches gegen Eindringen von Feuchtigkeit zu schützen. Die aufgeheizte Luft, die bei Sonneneinstrahlung unter den Solarmodulen entsteht, wird nicht genutzt. Dabei geht wertvolle Wärmeenergie verloren.

### BESCHREIBUNG

Ausgehend von diesem Stand der Technik liegt dervorliegenden Erfindung die Aufgabe zugrunde, ein verbessertes Solarenergie-Komplettsystem bereitzustellen, das es erlaubt, die Stromausbeute zu optimieren und die Anlage schnee- und eisfrei zu halten. Diese Aufgabe wird durch ein Solarenergie-Komplettsystem mit den Merkmalen des unabhängigen Anspruchs 1 gelöst. Bevorzugte Ausführungsbeispiele werden in den Unteransprüchen beschrieben..

Ein erstes Ausführungsbeispiel der Erfindung bezieht sich auf ein Solarenergie-Komplettsystem, das geeignet ist, auf geneigten Dach angeordnet zu werden, und mittels dessen Strom, Warmluft, Klimaluft und/oder Warmwasser erzeugt und Abwärme genutzt werden kann. Es umfasst eine Vielzahl von flächig angeordneten Solarmodulen mit Rahmen, die von einer Haltekonstruktion gehalten werden. Diese umfasst Hohlprofile, die zwischen zwei Folienschichten auf das Dach geschweißt sind und auf Grund ihrer Struktur erlauben, dass nun auf den Hohlprofilen die Solarmodule mit Rahmen angebracht werden können.

Weiter ist auf einer höchsten Linie des Daches ein Abluft- bzw. Zuluftkanal vorgesehen. Die Solarmodule sine Kanäle bildend angeordnet, und die Kanäle erstrecken sich in den Zuluft-/Abluftkanal.

Eine Vorrichtung zur Luftabsaugung bzw. zur Zuluftversorgung, die an dem Abluft- bzw. Zuluftkanal angeordnet ist, ermöglicht, dass die durch die besondere Anordnung der Solarmodule und der Hohlprofile geschaffenen Kanäle, die gegenüberder Außenluft abgedichtet sind, die unter den Solarmodule entstehende Hitze durch Betätigung der Vorrichtung zur Abluftabsaugung vorteilhaft abführen. Diese erhitzte Luft kann dabei vorteilhaft weiterer Energiegewinnung zugeführt werden.

Durch die Zufuhr von Zuluft über die genannte Vorrichtung zur Zuluft- bzw. Abluftversorgung, also durch reverse Betätigung dervorgenannten Vorrichtung, kann die heiße, stehende Luft durch Zuluft über den Abluft-/Zuluftkanal in die unter den Solarmodulen und unter den Hohlprofilen bereitgestellten Kanäle überführt werden. Die gute Durchlüftung verhindert vorteilhaft ein Überhitzen der Solarmodule und stellt die Erhaltung des optimalen Wirkungsgrads der Module sicher.

Das Einschweißen der Halterungsprofile geschieht konstruktiv einfach und geschickt, indem auf der Dachhaut zumindest eine erste Schicht Folienmaterial oder eine bituminierte Schweißbahn angebracht ist, auf der die Hohlprofile angeordnet werden. Eine zweite Schicht an Folienmaterial oder eine bituminierte Schweißbahn wird über dle Hohlprofile gelegt und mit der ersten Schicht an Folienmaterial adhäsiv, chemisch oder photochemisch verbunden, so dass die Hohlprofile vorteilhaft ortsfest auf dem Dach positioniert sind, ohne dass für ihre Anordnung die Dachhaut durchdrungen werden musste. Dies ist besonders vorteilhaft deswegen, da eine Nachabdichtung der Dachhaut entfällt. Es wird eine zusätzliche, geschlossene wasserführende Dachhaut geschaffen. Die Schweißbahn oder das Folienmaterial, welches die erste und/oder die zweite Schicht bildet, kann eine bituminöse Dachpappe sein. Damit kann leicht durch Verschweißen eine ortsfeste Positionierung der Hohlprofile auf der Dachhautrealisiert werden.

Die Solarmodulrahmen können an den Ecken Ausnehmungen aufweisen, so kann Regen oder durch inverses Betreiben der Anlage aus Schnee erzeugtes Wasser über die Ausnehmungen und über weitere Vorrichtungen wie gekantete Hohlprofile abfließen gelassen werden.

Die Luftzufuhr zum inversen Betreiben kann ebenfalls über eine an der höchsten Linie, also einer Firstllnie in operativem Kontakt mit dem Zuluft-/Abluftkanal angeordnete Vorrichtung zur Abluftabsaugung bzw. zur Zuluftversorgung erfolgen.

Eine weitere Ausführungsform bezieht sich darauf, dassauf einer Oberseite des Hohlprofils, also auf seiner dem Dach abgewandten Seite, auf dem ebenfalls sich gegenüberliegende Solarmodule aufliegen, ein Zwischenraum besteht, der einen Kabelkanalprofil aufnimmt.

Schließlich bezieht sich eine Ausführungsform darauf, dass das Kabelkanalprofil und/oder die Rahmen der Solarmodule durch Verschrauben oder Vernieten mit dem Hohlprofil verbunden sind. Dabei bleibt die Dachhaut ebenfalls vorteilhaft unverletzt und kann der Wasserabführung dienen.

Noch eine Ausführungsform bezieht sich darauf, dass über dem Hohlprofil ein Solarmodul-Befestigungsprofil angeordnet ist, welches vorteilhaft den Kabelkanal bereitstellt, und mit einem Abdeckprofil schützend bedeckt ist und das, abhängig von seinem Material, das aus einem sehr harten Kunststoff oder aus einem Metall bzw. einer Metallverbindung bestehen kann, eine belastbare Oberfläche bereitstellt, die gegebenenfalls zur Bereitstellung als Revisionspfad genutzt werden kann. Vorteilhaft kann dann bei einer Revision der Solarenergie-Komplettsystemanlage ein Revisionsschemel auf einem oder mehreren dieser Revisionspfade bewegt werden, so dass die Gefahr einer Beschädigung der Solarmodule erheblich verringert wird. Außerdem dient das Befestigungsprofil, das vorteilhaft einen hutförmigen Querschnitt aufweisen kann, wenn es offen bleibt, vorteilhaft als "Auffangwanne" für Laub und ähnliche lose Materialien, die also nicht auf den Solarmodulen liegen bleiben und den Wirkungsgrad des Moduls bzw. des ganzen Modul-Strings mindern und weniger Strom erzeugen.

Eine weitere Ausführungsform bezieht sich darauf, dass die Schmalseiten des Hohlprofils wasserdicht geschlossen werden können.

Diese und weitere Vorteile werden aus der nachfolgenden Beschreibung und den begleitenden Figuren ersichtlich.

### KURZBESCHREIBUNG DER FIGUREN

Der Bezug auf die Figuren in der Beschreibung dient der Unterstützung der Beschreibung. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

**Fig. 1a** zeigt eine Draufsicht auf einen First eines Dachs und den auf den First angeordneten Abluft-/Zuluftkanal mit Luftstromvolumen-Reglem sowie mit links und rechts des Abluft-/Zuluftkanals angeordneten Solarmodulen,

**Fig. 1b** zeigt eine Querschnittsansicht des Solarenergie-Komplettsystem auf dem First,

**Fig. 2a** zeigt eine Dachfläche mit dem darauf angeordneten Solarenergie-Komplettsystem in der Draufsicht,

**Fig. 2b** zeigt eine perspektivische Ansicht des Hohlprofils mit Kabelkanalprofil,

**Fig. 2c** zeigt ein Kabelkanalprofil mit eingelegtem Kabel in einer Seitenschnittansicht,

**Fig. 2d** zeigt eine perspektivische Ansicht des Befestigungsprofils, das einen hutförmigen Querschnitt aufweist, mit darüber angeordnetem Abdeckprofil,

**Fig. 3a** zeigt eine Seitenansicht des Daches mit Dachgefällekeilen zur Verstärkung der Dachneigung,

**Fig. 3b** zeigt ein Detail der Seitenansicht des Daches aus Fig. 3a,

**Fig. 4** zeigt eine Querschnittsansicht eines Stufentrapez-Hohlprofiles.

**Fig. 5a** zeigt eine perspektivische Ansicht von Solarmodulen, die mit Gefällekeilen aufgeständert sind,

**Fig. 5b** zeigt eine Schnitt- und teilweise perspektivische Ansicht der Solarmodulanordnung aus **Figur 1a****,**

**Fig. 6a** zeigt eine perspektivische Ansicht einer Ausführungsform der Solarmodulanordnung,

**Fig. 6b** zeigt eine Schnittansicht eines Verankerungs-Hohlprofils,

**Fig. 6c** zeigt eine Schnittansicht einer Verankerungshohlprofileinheit aus oberem und unterem Verankerungshohlprofil,

**Fig. 6d** zeigt eine Schnittansicht eines V-förmig gekanteten Verankerungs-Hohlprofils zur Wasserabführung,

**Fig. 6e** zeigt eine Schnittansicht einer Ausführungsform der Solarmodulanordnung mit V-förmig und Dach-förmig gekanteten Verankerungs-Hohlprofilen, wobei die Solarmodule in einer Zick-Zack-Anordnung aufgeständert sind,

**Fig. 7a** zeigt eine Draufsicht auf eine weitere Solarmodulanordnung,

**Fig. 7b** zeigt das Detail einer aus Wafern geschaffenen Solarmoduloberfläche, ergänzend zu den Solaroberflächen in Fg.3a,

**Fig. 7c** zeigt im Detail die erfindungsgemäße Regenablaufrinne aus **Fig. 7a****.**

**Fig. 8a** zeigt eine perspektivische Ansicht einer erfindungsgemäßen Solarmodulanordnung mit Gefällebügeln als Aufständerungselemente,

**Fig. 8b** zeigt eine perspektivische Seitenansicht des Gefällebügels aus Figur 4a.

**Fig. 8c** zeigt eine perspektivische Seitenansicht einer erfindungsgemäßen Solarmodulanordnung mit Gefällebügel, wobei ein Multifunktionsprofil der Windableitung dient.

**Fig. 9a** zeigt eine perspektivische Ansicht einer erfindungsgemäßen Solarmodulanordnung, die einen Speicherraum bildet und eine geregelte Luftzu- bzw. - abfuhr aufweist.

**Fig. 9b** zeigt eine Seitenschnittansicht der in Figur 9a dargestellten Anordnung.

**Fig. 10a** zeigt eine perspektivische Ansicht einer Ausführungsform der Erfindung, wobei das Verschlussblech mit innen liegender PU-Schaum-Rolle dargestellt ist.

**Fig. 10b** zeigt eine perspektivische Ansicht eines Details aus Figur 3310a, wobei das Verschlussblech mit innen liegenden PU-Schaum-Rollen dargestellt ist.

**Fig. 10c und 10d** sind Seitenschnittansichten der Anordnung des Verschlussblechs mit innen liegender PU-Schaum-Rolle.

Ehe die Erfindung nachfolgend im Detail beschrieben wird, ist deutlich zu machen, dass die in dieser Erfindung verwendete Terminologie zum Zweck der Beschreibung verschiedener Ausführungsformen gewählt ist, sie soll daher nicht beschränken. Nachfolgend werden daher Begriffe hinsichtlich ihrer Bedeutung fürdie vorliegende Erfindung definiert. So wird nachfolgend unter einem "Dachfirst" oder kurz "First" die höchste Kante an einem geneigten Dach verstanden. Dort treffen, außer beim Pultdach, zwei Dachflächen aufeinander. Ein Sonderfall ist das Flachdach, bei Flachdächern mit Gefällesystem gibt es ebenfalls einen First, der durch die höchstgelegene Kante jeweils einer Dachfläche bereitgestellt wird.

Als "Solarmodule" werden vorliegend im Wesentlichen flache Photovoltaikelemente zur Gewinnung von Strom aus Sonnenenergie bezeichnet. Diese können monokristalline Solarmodule sein.

Unter einem "Ventilator" wird nachfolgend jede Vorrichtung verstanden, die geeignet ist, Luft aus dem erfindungsgemäßen Solarenergie-Komplettsystem abzusaugen oder Luft in dieses hineinzufördern.

Ferner wird unter einer "Abdichtschnur" jedes längliche abdichtende Material verstanden, das geeignet ist, in Ritzen oder Spalte eingebrachtzu werden, um diese luftdicht zu verschließen.

Unter "Folie" oder "Schweißbahnen", wird nachfolgend jedes geeignete Material, insbesondere bituminöse Bahnen, die sich verschweißen lassen, verstanden, welches geeignet ist, die Hohlprofile wasserdicht einzubetten.

Die vorliegenden erfindungsgemäßen Solarenergie-Komplettsysteme können auf einem flachen oder auch leicht geneigten Dach mit First angeordnet werden. Sie weisen eine Vielzahl von flächig angeordneten Solarmodulen, die in Rahmen gefasst sind, auf, und werden auf dem Dach von einer Naltekonstruktion gehalten. Diese wird von Hohlprofilen gebildet, die zumindest einen seitlich angeformten Flansch, vorzugsweise sogar zwei angeformte Flansche haben, damit sie gut auf einer Dachhaut aufliegen können, auf der eine erste Schweißbahn aufliegt. Auf dieser ersten Schicht Folienmaterial oder der Schweißbahn werden die Hohlprofile in der Weise angeordnet, dass sie im Wesentlichen parallel zueinander zu liegen kommen, und somit eine "Schienenanordnung" für eine Vielzahl von Solarmodule bilden, die darauf die Dachfläche bedeckend angeordnetwerden können. Sobald die Hohlprofile aufder Dachhaut angeordnet sind, wird eine zweite Schicht, die aus Folienmaterial, die insbesondere durch Bitumen-Schweißbahn-Material bereitgestellt werden kann, entweder vollflächig oder zumindest teilflächig über den Hohlprofilen abgelegt und die erste Schicht an Folienmaterial oder Bitumen-Schweißbahn wird mit der zweiten Schicht an Folienmaterial oder Bitumen-Schweißbahn derart verbunden, dass die Hohlprofile auf dem Dach positioniert sind. Die Anordnung der zweiten Schicht kann ferner eine Windsog- und Seitenwindfestigkeit der Anlage bereitstellen; darüber hinaus kann die zweite Schicht zusätzlich zu der ersten eine weitere wasserführende Schicht bilden. Die Haltekonstruktion kann eine Aufständerung der Solarmodule umfassen,wobei dennoch eine Kanalbildung unter einer Reihe Solarmodule beibehalten wird.

Wenn beispielsweise das Folienmaterial eine bituminöse Dachpappe ist, kann vorteilhaft die zweite Schicht ebenfalls aus bituminöser Dachpappe bestehen, dann kann durch Verschweißen der beiden Dachpappenschichten eine feste Verbindung hergestellt und die Hohlprofile somit positioniert werden. Dieses Material hat den Vorteil, dass es wasserdicht ist und somit auf der Dachfläche eine Wasserablauffläche bildet. Es ist jedoch ebenfalls denkbar, dass sowohl die erste Schicht von Folienmaterial als auch die zweite aus einem Kunststoffmaterial besteht, so dass eine adhäsive, chemische oder photochemische Verbindung zwischen den beiden Folienschichten herstellbar ist. Gerade bei Kunststofffolien, die vorteilhaft wasserabweisend gefertigt werden können und die mit speziellen Nanostrukturen beschaffen sein können, um etwa Algenwachstum zu verhindern oder besonders rasch Wasser abzuführen, oder die auch schmutzabweisend sein können, gibt es den Vorteil, dass diese selbstvemetzend, selbstklebend oder photochemisch vernetzend sein können. Das heißt, dass bereits durch Sonneneinstrahlung bewirkt werden kann, dass eine photochemisch aktive Folie sich mit einer zweiten Folienschicht verbindet. Abhängig von der Dimension der Hohlprofile wird nun ein tragfähiges System geschaffen, das ähnlich einer Konterlattung auf einem Ziegeldach ist, zu seiner Anbringung auf der Dachhaut jedoch keine Beschädigung desselben erfordert.

Es ist anzumerken, dass, obwohl mit der vorliegenden Erfindung grundsätzlich eine Beschädigung durch Durchbohren der Dachhautvermieden wird, das wasserdichte Abschließen der Hohlprofile dazu führt, dass die wasserführende Schicht nicht mehr auf der Gebäudedachhaut direkt liegen wird, sondern über der obersten Folienschicht. Daher führt in diesem Fall ein Durchbohren der Gebäudehaut, die bei Verschrauben der Hohlprofile in Situationen, in denen extreme Windsogkräfte zu erwarten sind, etwa bei Hochhäusem, durchgeführt werden könnte, nicht mehr zu Undichtigkeiten der Gebäudehaut.

Die nunmehr von der Folie überlappten, eingeschweißten und parallel angeordneten Hohlprofile werden nun mit Solarmodulen derart belegt, dass zwei sich gegenüberliegende Seiten eines Solarmoduls, das üblicherweise rechteckig oderquadratisch sein wird, auf zwei Kanten eines Hohlprofils zu liegen kommen. Das Solarmodul überbrückt damit den Abstand zwischen den beiden Hohlprofilen. An den nichtaufden Hohlprofilen aufliegenden weiteren zwei sich gegenüberliegenden Seiten eines Solarmoduls werden weitere Solarmodule abgedichtet angeordnet, bis die Dachfläche zum First hin belegt ist. Die Hohlprofile sind auf derDachhaut des Daches, das vorzugsweise ein Dach mit einer geringen Neigung, also vorzugsweise kein Steildach sein wird, angeordnet, dass die Solarmodule mit zwei Seiten jeweils auf einem Hohlprofil zur Auflage kommen, so dass quasi zwei Hohlprofile eine Schiene bilden, auf der eine Vielzahl von Solarmodulen angeordnet werden kann.

Dabei bilden die Seitenwände der Hohlprofile und die darauf aufliegenden, von den Hohlprofilen getragenen Solarmodule mit der Dachhaut einen Kanal. Die Hohlprofile des erfindungsgemäßen Solarenergie-Komplettsystemssindgrundsätzlich so auf der Dachhaut angeordnet, dass diese nicht verletzt wird. Auf dem First oder der Hochseite des Pultdaches kann ein Abluft-/Zuluftkanal angeordnet sein.

Die Haltekonstruktion für die Solarmodule kann auch überden Hohlprofilen und über der zweiten Schweißbahn Gefällekeile oder Gefällebügel aufweisen, damit die Solarmodule optimal zur Sonneneinstrahlung weisen. Damit die gewünschten Kanäle, die durch zumindest die Hohlprofile und eine Reihe an Solarmodulen samt Rahmen gebildet werden, dicht sind, werden die entsprechend nicht mit Solarmodulen belegten Rückseiten der Gefällekeile mit Windabweiserblechen verblendet.

Es ist möglich, die dicht liegende Reihe von Solarmodulen, auch die aufgeständerten Solarmodule in einer Reihe durch eine dazu quer liegende Anordnung von Solarmodul-Befestigungsprofilen zu unterbrechen, die jedoch ebenfalls abgedichtet angeordnet werden. Diese können ein Querschnittsprofil wie etwa das Querschnittsprofil eines Hutes haben. Das Profil dient unter anderem als Laubfänger. Der somit von den Seitenwänden zweier benachbarter Hohlprofile, einer Reihe an Solarmodulen und der Dachhaut bereitgestellte Kanal mündet am First in einen dort angeordneten Abluft-/Zuluftkanal, der ebenfalls auf den Hohlprofilen, die in ihn hineinmünden, angeordnet ist. Damit wird vorteilhaft erreicht, dass auch das Festlegen des Abluft-/Zuluftkanals keine Durchdringung der Dachhaut erfordert. Dieser kann darüber hinaus an der Gebäudekonstruktion von außen festgelegt werden.

Es werden somit zum einen Kanäle bereitgestellt, die jeweils unter den Solarmodulen liegen, zum zweiten werden kleinere Kanäle durch die Hohlprofilen selbst bereitgestellt. Auch unterdiesen wird Aufheizwärme produziert. Die Vielzahl dieser Kanäle mündet in den Abluft-/Zuluftkanal, der am First angeordnet ist und an dem eine Vorrichtung zur Abluftaufsaugung und/oder zur Zuluftversorgung derart angeordnet ist, dass vorteilhaft warme Luft aus den Kanälen abgesaugt und der weiteren Energiegewinnung zugeführt werden kann, oder dass kalte Luft in die Kanäle geführt bzw. gedrückt werden kann um die Solarmodule zu hinterkühlen, um ihre Lebensdauerzu verlängern und die Stromausbeute zu optimieren.

Da die Solarmodule jeweils nur auf dem Rand eines Hohlprofils zur Auflage kommen, bei dem es sich um ein Hohlprofil mit trapezförmigem Querschnitt, mitstufentrapezförmigem Querschnitt oder um ein anderes, dem Fachmann geeignet erscheinendes Hohlprofil handeln kann, damit die Befestigung mittels derzweiten Folien-oder Schweißbahnschichten geschickter realisiert werden kann, bleibt zwischen zwei Reihen von Solarmodulen auf den Hohlprofilen ein Zwischenraum bestehen, auf dem ein Solarmodul-Befestigungsprofil angeordnet werden kann. Dieses Solarmodul-Befestigungsprofil kann als ein Kabelkanalprofil verwendetwerden, um elektrische Kabel derSolarmodul-Kabelinstallation unterzubringen. Selbstverständlich könnenseparate Kabelkanalprofile zusätzlich eingesetzt werden.

Um sowohl die mit Folie oder Schweißbahnen überdeckten Hohlprofile zu sichern und zu schützen, kann ein Solarmodul-Befestigungsprofil derart auf den Zwischenraum zwischen zwei Solarmodulreihen gesteckt werden, dass das Hohlprofil in seiner ganzen Länge durch das Solarmodul-Befestigungsprofil bedecktwird. Um auch auf den Solarmodul-Befestigungsprofilen angeordnete Kabel oder um die Kabelkanalprofile zu schützen, kann ein Abdeckprofil bereitgestellt werden:

Dieses ist vorteilhaft C-förmig oder U-förmig und umgreift das oder die bereitgestellten Kabelkanalprofile bzw. wird in das Solarmodul-Befestigungsprofil gesteckt. Wenn das Abdeckprofil aus einem stabilen Material wie etwa einem Metall oder einem Hartkunststoff mit einer gewissen Stärke beschaffen ist, so können diese belastbar sein und auf dem Dach Revisionspfade bereitstellen. Das heißt, dass auf den Solarmodul-Befestigungsprofilen mit Abdeckprofil eine Vorrichtungen wie beispielsweise ein Montageschemel abgestellt werden kann, auf den zu Revisionszwecken gesessen odergeknietwerden kann. Dieser Montageschemelist somit entlang aller geschaffenen Hohlprofil-"Schienen" bewegbar. Damit wird vorteilhaft ermöglicht, dass die Solarmodule geschützt werden und dass auch derjenige, der eine solche Revision oder Arbeiten auf dem Dach vornimmt, davor geschützt ist, sich an den Solarmodulen zu verletzen.

Bei den Solarmodulen kann es sich um monokristalline Solarmodule, Dünnschicht-Solarmodule, respektive Photovoltaikelemente, oder andere geeignete Solarmodule, die beispielsweise nur Warmluft produzieren, handeln.

Die Hohlprofile können rechtwinklig zum Dachfirst verlaufen. Es ist möglich, quer zu den Hohlprofilen und ebenfalls quer zu den Reihen an Solarmodulen jeweils nach einer Mehrzahl aneinandergereihter Solarmodulen Solarmodul-Befestlgungsprofile für dieselben anzuordnen, wobei ein solches Solarmodul-Befestigungsprofil parallel zum Abluft-/Zuluftkanal verläuft. Zu den jeweiligen Dachgiebeln hin kann die von den Solarmodulen überstrichene Fläche durch Profile abgeschlossen sein, insbesondere durch Profile, die etwa aus Aluminium, einem Polyurethan-Sandwich-Elementodereinem Kunststoff beschaffensein können. Diese Profile können die gesamte die Dachfläche bedeckende Solarmodulanordnung umgeben und können geeignet sein, Elektrokabel, insbesondere auch Elektrokabel, die entlang der Hohlprofile geführt werden, aufzunehmen und zusammenzuführen.

Üblicherweise werden die Solarmodule auf Rahmen bereitgestellt, etwa auf Aluminiumrahmen, Solche Solarmodule können monokristalline Solarmodule sein, dann werden die Rahmen bevorzugt eine U-Form aufweisen. Mittels dieser Rahmen können die Solarmodule auf die Hohlprofile geschraubt bzw. geklemmt werden, ohne dass die eine Gefahr für die wasserführende Haut des Daches bestünde. Auch derAbluft-/Zuluftkanal kann mit den Hohlprofilen, die sich in ihn hinein erstrecken, verschraubt oder vernietet werden. An geeigneter Position, vorzugsweise an einem der beiden Enden eines Dachfirsts, wird eine Vorrichtung wie etwa ein Ventilator zur Abluft- und Zuluftbereitstellung angeordnet. Damit kann die erhitzte Luft, die unter den Solarpaneelen steht, abgesaugt werden. Vorteilhaft kann diese erhitzte oder auch vorgewärmte Luft zur weiteren Energiegewinnung, insbesondere zur Vorwärmung von Wasser, das etwa im Haus benötigt wird, verwendet werden. Ferner kann sie zur Einspeisung in vorhandene Warmluft-Blech-Kanalheizungen eingesetzt werden, die häufig in gewerblichen Nutzungsflächen zur Anwendung kommen. Die Wärme kann aber auch zur Erzeugung von klimatisierter Luft verwendet werden. Bedarfsweise kann auch kältere Umgebungsluft unter die Solarmodule geblasen werden, wenn die Lufttransportrichtung des Ventilators umgekehrt wird.

Damit die Luftabsaugung oder Kühlluftzuführung aus den auf dem Dach bereitgestellten Kanälen effizient erfolgen kann, können alle bei der Anordnung der Solarmodule aus den Hohlprofilen und bei der Anordnung des Abluft-/Zuluftkanals auf dem First entstehenden Spalten und Ritzen abgedichtet werden, was vorteilhaft mit einer Abdichtungsschnur erfolgen kann. Hierbei kann es sich um jedwedes längliche Schnur- oder Litzenmaterial handeln, welches abdichtungsgeeignet ist; in Frage kommt etwa ein gegen Ultraviolettlicht beständiges Material wie ein UV-beständiges Moosgummi.

Die Absaugvorrichtung, mittels welcher die warme Luft aus dem Abluft-/Zuluftkanal abgesaugt wird, kann unmittelbar mit einer Wärmepumpe gekoppelt sein. Ferner kann sie einen oder mehrere Luftvolumenstromregler aufweisen. Damit wird weitere Stromerzeugung oder andere Energiegewinnung z. B. Kaltluftgewinnung zwecks Raumklimatisierung möglich.

Schließlich können in alle bereitgestellten, warme Luft führenden Kanäle Vorrichtungen zur Erwärmung von Wasser, etwa Wasserschläuche oder -Leitungen eingebrachtwerden. Damit kann die unter den Solarmodulen entstehende Wärme zusätzlich genutzt werden.

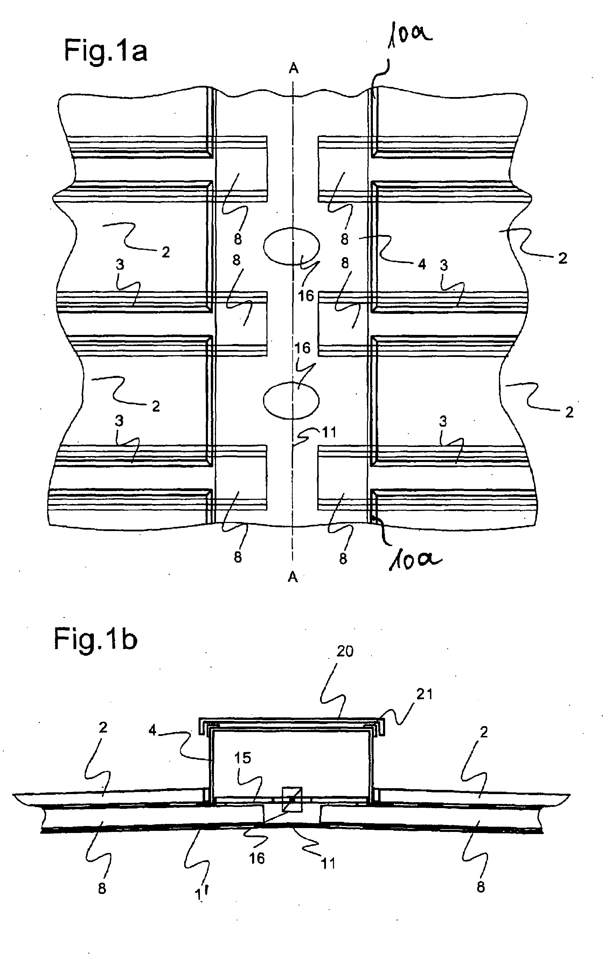

**Figur 1a** zeigt eine Draufsicht auf den First mit dem erfindungsgemäßen Solarenergie-Komplettsystem, wobei die Solarmodule 2mit Solarmodulrahmen 10a im rechten Winkel zu der Firstlinie A-A stehen. Die im Wesentlichen rechteckigen Solarmodule 2 liegen mit ihren langen Seiten, respektive mit ihren Rahmen, die eine Metallunterkonstruktion 3 bilden, auf jeweils zwei benachbarten, parallel verlaufenden, ebenfalls im rechten Winkel zu der Firstlinie A-A stehenden Trapez-Hohlprofilen 8 auf. Wie aus **Figur 1a** ersichtlich, ragen die Trapez-Hohlprofile 8 in den Abluft-/Zuluftkanal 4 hinein. Damit kommt der Abluft-/Zuluftkanal 4 auf den Trapez-Hohlprofilen 8 zu liegen und kann an diesen befestigt, etwa mit ihnen verschraubt oder vernietet werden.

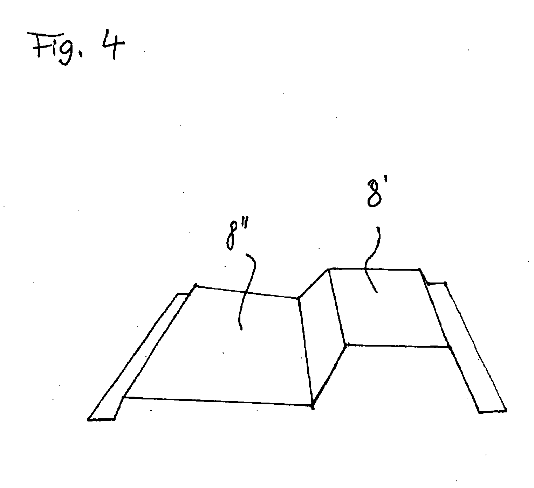

Alternativ zu den Trapez-Hohlprofilen 8 der **Fig. 1a** können die in **Fig. 4** gezeigten Stufentrapez-Hohlprofile 8'eingesetzt werden: Diese sind besonders vorteilhaft deshalb, weil durch die Stufe 8" ein Abschnitt geschaffen wird, der tiefer liegt, als die obere Fläche des Trapezes, so dass ein Solarmodul, das auf zwei Stufentrapez-Hohlprofilen 8' zur Auflage kommt, eine Neigung, respektive ein Gefälle von etwa 4 % bekommt, da es mit einer Längskante auf der höher gelegenen oberen Fläche des Stufentrapez-Hohlprofil 8' zu liegen kommt, und mit seiner zweiten Längskante auf der niederer liegenden Fläche der Stufe 8" aufliegt. Damit wird besonders für den Fall, dass die Solarmodule aus monokristallinen Solarzellen bestehen, eine Selbstreinigung der monokristallinen Solarzellen-Oberflächen durch Regen möglich. Darüberhinaus wird eine Verschattung hintereinander liegender Modulreihen verhindert.

**Figur 1b** zeigt in einer schematischen Seitenschnittansicht den auf Hohlprofilen aufliegenden Abluft-/Zuluftkanal 4, der, um zusätzlich geschützt zu werden, vorliegend mit einer Schutzplatte 21 versehen ist. Diese kann etwa aus Alu-Riffelblech von 2 mm Stärke bestehen. Die Schutzplatte 21 ist auf Kantenverstärkungswinkeln 20 angeordnet, die aus Aluminium sein können und die entlang der beiden Kanten des Abluft-/Zuluftkanals 4 abgedichtet aufgelegt sind. Damitwird der Abluft-/Zuluftkanal 4 vorteilhaft gegen Beschädigung, insbesondere durch Hagel oder andere Witterungseinflüsse, geschützt und er wird begehbar, beispielsweise zu Revisionszwecken.

Wie vorliegend gezeigt, kann innerhalb des Abluft-/Zuluftkanals 4 unmittelbar über den Hohlprofilen 8,8'eine Abdeckplatte 15 aufgelegt werden. Diese kann sogar wärmegedämmt sein. Diese Abdeckplatte 15, die den Boden des zentralen Lüftungskanal bildet, kann entlang der Firstlinie A-A mit Absaugöffnungen 16 in Verbindung mit Luftstromvolumen-Reglern 16', die mit den Ansaugöffnungen 16 gekoppelt sind, wie auch gezeigt in **Figur 1a****,** versehen sein. Die Solarmodule 2 grenzen an den Abluft-/Zuluftkanal 4 derart an, dass der bereitgestellte Kanal 13 für die Zu- beziehungsweise Abfuhrwarmer Luft, beziehungsweise für Frischluft zu m Kühlen der Module 2 sich direkt in den Abluft-/Zuluftkanal 4 öffnet. An der Grenzfläche der Solarmodule 2 zu der Abluft-/Zuluftöffnung 4 kann eine Abdichtung durch ein Dichtungsbandoder eine Abdichtschnur bereitgestellt werden.

Die Breite der Solarmodule 2 wird im Bereich von 40,0 bis 100,0 cm liegen, bevorzugt sind 80 cm Breite, eine Länge kann im Bereich von 1,20 m bis 180,0 cm liegen, bevorzugt sind 160 cm. Die Dicke kann im Bereich von 3,0 cm bis 6,0 cm liegen, bevorzugt sind 4,5 bis 5,0 cm Dicke für konventionelle, monokristalline Solarmodule, bei Dünnschicht-Solarmodule kann durchaus eine geringere Dicke, und zwar im Bereich von unter 5 cm, bis zu 5,0 mm vorliegen.

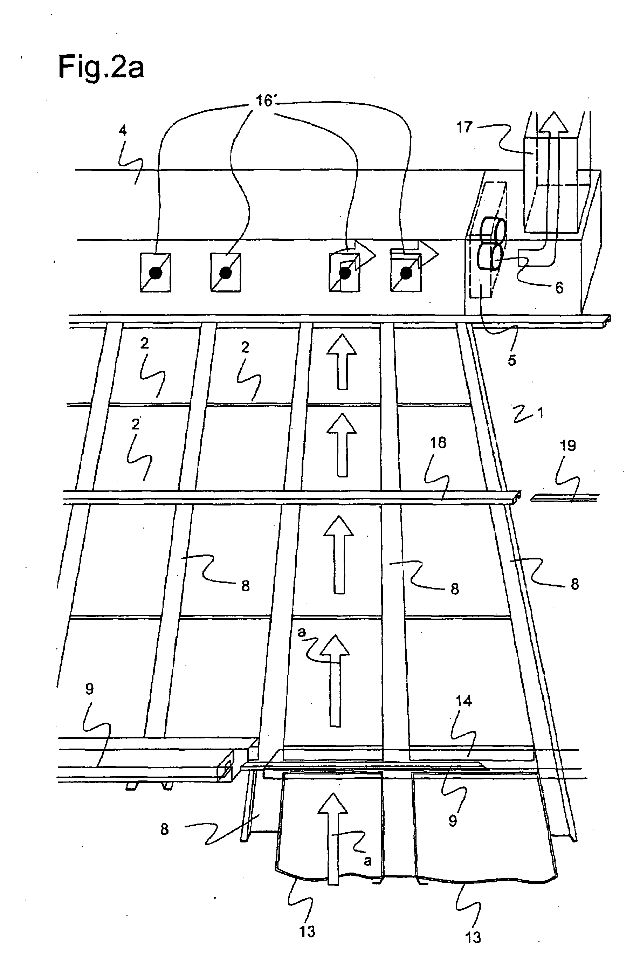

**Figur 2a** zeigt die Draufsicht auf eine Dachfläche mit einem am First angeordneten Abluft-/Zuluftkanal 4, auf dem ein Ventilatorgehäuse 5 mit einem Ventilator 6 angeordnet ist. Hohlprofile 8,8'sind im rechten, aberauch in einem jeden anderen Winkel zu der Firstlinie A-A angeordnet, jeweils zwei Hohlprofile bilden eine Auflage für eine Reihe an Solarmodulen 2. Es sind jeweils zwei Solarmodule 2 unmittelbar benachbart auf den Hohlprofilen 8,8'abgelegt, nach einer Höhe von zwei Solarmodule einer Reihe erstreckt sich ein Abluftstutzen 17 quer zu mehreren Reihen an Solarmodulen 2 parallel zur Firstlinie A-A über die Fläche des Solarenergie-Komplettsystems. Vorteilhaft ist pro 1 Hohlprofilreihe je ein Luftstromvolumen-Regler 17 in dem Abluft-/Zuluftkanal 4 angeordnet. Grundsätzlich können die Hohlprofile in einem jeden anderen geeigneten Winkel zu der Firstlinie A-A angeordnet sein und die entsprechende Auflage für die Module ausbilden, so dass die erfindungsgemäßen Kanäle bereitgestellt werden.

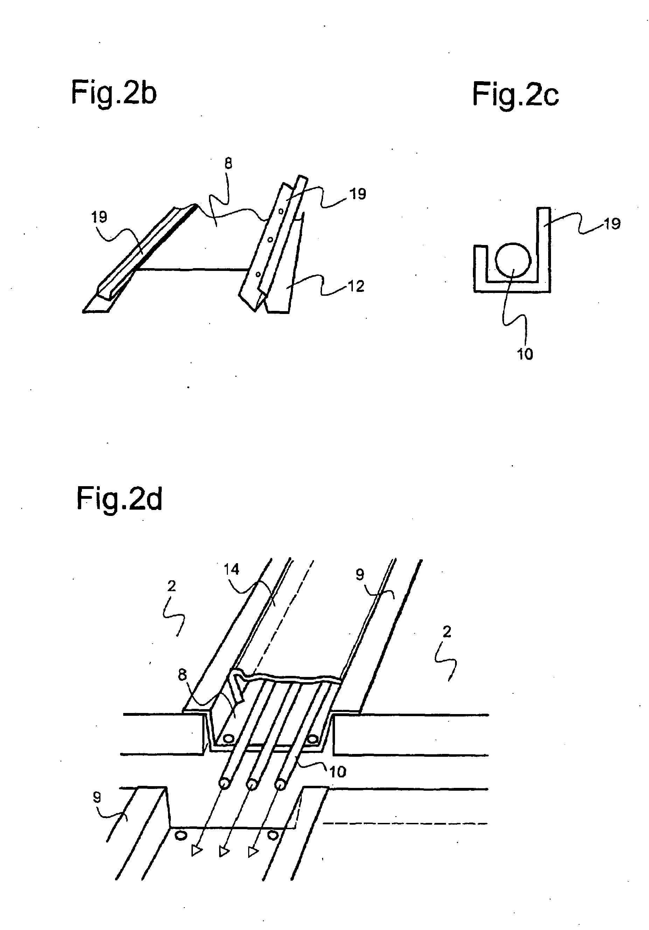

Eine Reihe an Solarmodulen 2 bildet jeweils einen Kanal 13, dessen darunter erwärmte Luft in den Abluft-/Zuluftkanal 4 überführt werden kann, da der Kanal 13 unmittelbar in den Abluft-/Zuluftkanal 4 mündet. Die Hohlprofile 8 werden nicht durch die Solarmodul-Befestigungsprofile 9 durchbrochen, die auch die Solarmodule 2 an ihrer Stirnseite befestigen können. Die Solarmodul-Befestigungsprofile 9 sind vielmehr auf den Hohlprofilen 8 verschraubt und überbrücken die stirnseitige Zwischenräume zwischen jeweils einem Paar von Solarmodulen 2 in einer Reihe und dem benachbarten Paar an Solarmodulen 2. Selbstverständlich wird der Fachmann wissen, dass die Solarmodul-Befestigungsprofile 9 als Kabelkanal dienen können, oder mit Kabelkanälen 19 zusätzlich versehen sein können. Diese liegen sind den Unterprofilen auf, die planeben ausgefüllt werden können, **siehe** **Fig. 2d****.**

Wie insbesondere aus den Details der Figuren **2b** bis **2d** deutlich wird, können Vorrichtungen zur Aufnahme von Kabeln entlang der Hohlprofile 8 vorgesehen sein. Figur 2b zeigt, dass an den Trapezseitenflächen der Hohlprofile 8 ein Kabelkanalprofil 19 angeordnet werden kann. Ferner kann zwischen zwei sich gegenüberliegenden langen Seiten zweier Solarmodule 2, die für gewöhnlich eine rechteckige Oberfläche aufweisen werden, ein Zwischenraum 7 bereitstehen, der geeignet ist, ein Kabelkanalprofil 19 oderein Solarmodul-Befertigungsprofil, das der Kabelaufnahmedient, aufzunehmen. Ein Kabelkanalprofil 19 kann einen lichten Querschnitt von bis zu 20 x 20 mm aufweisen und ist daher geeignet, Elektrokabel 10 für die Solarmodul-Kabelanlage, insbesondere eine Solar-Stringkabelinstallation aufzunehmen. Das Kabelkanalprofil 19 kann aus einem Kunststoff wie Polyvinylchlorid (PVC) beschaffen sein.

Entsprechend einer bevorzugten Ausführungsform ist der auf den Hohlprofilen bereitstehende Zwischenraum 123 mm breit. Dies ergibt sich aus der Anordnung von Metallunterkonstruktionselementen, die aus gängigen und kommerziell erwerblichen Trapezblechen zu Hohlprofilen geschnitten werden können, und den Größen der Solarmodule. Selbstverständlich sind auch andere Breiten für Zwischenräume möglich.

**Figur 2c** zeigt ein in das Kabelkanalprofil 19 eingelegtes Elektrokabel 10. Das Kabelkanalprofil 19 kann vorteilhaft ebenfalls an das Hohlprofil 8,8'angeschraubt oder damit vernietet werden, ohne dass die Dachhaut in Mitleidenschaftgezogen wird.

Es kann auch zwischen zwei Querseiten zweier Solarmodule ein Solarmodul-Befestigungsprofil 9, das aus Aluminium sein kann, auf die Hohlprofile 8 verschraubt werden. Diese Solarmodul-Befestigu ngsprofile 9 müssen nicht zwischen allen Querseiten angeordnet werden, es ist ausreichen, sie etwa nach jedem zweiten Solarmodul 2 einer Reihe anzuordnen. Dieses Solarmodul-Befestigungsprofil 9 dientgleichzeitig als quer verlaufender Querkabelkanal 19, der mit einem Solarmodul-Befestigungsprofil 9 flächenbündig verbunden werden kann.

Zu den Giebelseiten hin kann die Solarenergie-Komplettsystemanlage mit Kabelkanal-Unterprofilen 9 abgeschlossen sein, die vorzugsweise aus Aluminium, Kunststoff odereinem anderen geeigneten Metall oder einer Metallverbindung beschaffen sein können.

Um die erfindungsgemäße Solarenergie-Komplettsystemanlage auf einem Dach 1 anzubringen, kann wie folgt vorgegangen werden:

Zunächst wird die Fläche des Daches, die vorgesehen ist, mit dem Solarenergie-Komplettsystem belegt zu werden, mit einer ersten Schicht Folienmaterial, die durchaus mehrlagig sein kann, belegt. Auf diese Schicht Folienmaterial werden sodann die Hohlprofile in der gewünschten Position platziert, die vorzugsweise parallel zu den Frontgiebelseiten verlaufen wird. Die Hohlprofile, die Trapez- oder Stufentrapezhohlprofile sein können, stehen vorliegend im rechten Winkel zu einer Seitenwand des Abluft-/Zuluftkanals, der nachfolgend am First angeordnet werden wird. Wenn die Hohlprofile auf der ersten Folienschicht platziert sind, werden sie von einer zweiten, ebenfalls durchaus mehrlagigen Schicht an Folienmaterial bedeckt und die Schichten werden durch Verschweißen oder Verkleben miteinander verbunden. Damit werden die Hohlprofile ortsfest auf dem Dach positioniert. Die gleiche Vorgehensweise gilt auch für bituminöse Schweißbahnen. Grundsätzlich können die Hohlprofile auch in einem anderen Winkel zu einer Seitenwand des Abluft-/Zuluftkanals angeordnet werden, sofern die erfindungsgemäßen Kanäle ausgebildet werden.

Sobald die Hohlprofile stabil angeordnet sind, kann auf dem First der Abluft-/Zuluftkanal angeordnet werden. Er kommt auf den Enden der Hohlprofile zu liegen und wird durch diese vom First beabstandet. Der Abluft-/Zuluftkanal kann mit den Hohlprofilen verschraubt oder vernietet werden.

Nun können die Solarmodule angeordnet werden. Hierzu wird jeweils ein Solarmodul, welches vorzugsweise rechteckig oder quadratisch ist, so über zwei parallel verlaufenden benachbarten Hohlprofilen positioniert, dass seine Metallunterkonstruktion 3 gerade auf deren Kanten sicher und abgedichtet zur Auflage kommt. Die Solarmodule weisen üblicherweise einen Rahmen aus Metall auf, der entsprechend an den Auflagekanten mit den Hohlprofilen verschraubt oder vernietet oder verklemmt werden können. Parallel zum First werden so mehrere Reihen an Solarmodulen auf den die Unterkonstruktion bildenden Hohlprofilen angeordnet. Nach zwei oder mehreren Reihen an Solarmodulen kann ein Solarmodul-Befestigungsprofil, das einen Querschnitt hat, der einem Hutquerschnitt gleicht, für die Solarmodule, welcher gleichzeitig als Kabel-Kanal oder als Laubfänger dient und mit einem Abdeckprofil versehen werden kann, quer zu den Hohlprofilen auf die Hohlprofile aufgelegt werden. Das Befestigungsprofil mit Abdeckprofil ist so beschaffen, dass es als Kabelkanal dienen kann.

Sobald die Dachfläche von den Giebeln bis zur Traufe mit den Solarmodulen und entsprechenden Solarmodul-Befestigungsprofilen belegt ist, können die Zwischenräume, die zwischen zwei parallelen Reihen an Solarmodule an der Oberseite der Hohlprofile bestehen, geschlossen werden, indem auf den Hohlprofilen zunächst Hohlprofil-Kabelkanäle bereitgestellt werden. Diese sind geeignet, die aus den Solarmodulen austretenden Elektrokabel aufzunehmen. Nun noch verbleibende Ritzen zwischen zwei sich gegenüberliegenden Solarmodulen, zwischen denen ein Solarmodul-Befestigungsprofil angeordnet ist, können durch entsprechende Abdeckmaterialien beziehungsweise Abdichtmaterialien wie Moosgummi oder Abdichtschnur geschlossen werden.

Die zum First hin weisende letzte Reihe an Solarmodulen, weiche an eine Außenwand des Abluft-/Zuluftkanals angrenzt, wird ebenfalls abdichtend angeordnet, beziehungsweise es wird ein Dichtungsband oder eine andere geeignete, möglicherweise UV-beständige und wasserfeste Abdichtmasse in Zwischenräume eingebracht. Schließlich können Alu-Kantenverstärkungswinkel auf die vom Dach abgewandten Kanten des Abluft-/Zuluftkanals aufgelegt werden, auf diese wiederum wird ein Alu-Riffelblech als Schutzplatte gelegt, das etwa 2 mm Stärke aufweisen kann. Selbstverständlich können auch andere Metall- oder Kunststoffmaterialien als abschließende Schutzelemente auf den Abluft-/Zuluftkanal aufgelegt werden.

Falls es als erforderlich angesehen wird, können die in den Abluft-/Zuluftkanal ragenden Hohlprofile, die einen Trapez- oder einen Stufentrapezquerschnitt aufweisen können, wobei der Querschnitt jedoch auch durchaus eine andere als Trapez- oder Stufentrapezform haben kann, nach oben durch eine entlang der Firstlinie A-A verlaufende Abdeckplatte, die gleichzeitig der Boden des Abluft-/Zuluftkanals ist, abgedeckt werden. In entsprechenden Abschnitten weist diese Platte sodann Ansaugöffnungen und Luftstromvolumen-Regler auf, die unterschiedliche Dimensionen, abhängig von dem Abluft-/Zuluftkanal und der Beabstandung der sich von zwei Hohlprofilen gegenüberliegender Dachflächenseiten ergibt. Schließlich wird an einer entsprechend am Ende eines Kanals bereitgestellten Öffnung des Abluft-/Zuluftkanals nach außen ein Gehäuse eines Absaug-/Einblas-Ventilators angeordnet.

Die Inbetriebnahme des Ventilators im Saugmodus bewirkt, dass nunmehr die Luft aus den dicht abgeschlossenen Kanälen, die durch die Hohlprofile und durch die von den Hohlprofilen, der Dachhaut und der von Solarmodule gebildeten Kanäle kommt, abgesaugt werden kann, wie Pfeile a in **Figur 2a** verdeutlichen. Eine Umkehrung des Betriebsmodus von Saugen nach Blasen bewirkt, dass entsprechend Luft von außen durch die genannten Kanäle geblasen und die Solarmodule 2 zum vorteilhaften Erhalt ihres Wirkungsgrads von unten gekühlt werden können.

Um eine Revision der Elemente vorzunehmen, die auf dem Dach 1 angeordnet sind, wird lediglich auf die Revisionspfade, die durch die stabil abgedeckten Solarmodul-Befestigungsprofile 9 mit den Abdeckprofilen 14 bereitgestellt sind, eine Revisionsvorrichtung wie etwa eine vierbeinige, die Module überspannende Revisionsplattform aufgelegt. Diese kann wie auf Schienen entlang der Revisionspfade bewegt werden und stellt dabei vorteilhaft sicher, dass die Solarmodule 2 und weitere Bestandteile der Konstruktion nicht beschädigt werden, der Bediener selbst kann bequem und geschickt auf dem Dach 1 hantieren.

Vorteilhaft wird nun der Abluft-/Zuluftkanal an eine Wärmepumpe angeschlossen, so dass die in der erwärmten Luft zur Verfügung stehende Energie ökonomisch weiter genutzt werden kann, entweder, indem unmittelbar Wasser aufgeheizt wird oder indem damit Strom oder Kaltluft zur Raumklimatisierung erzeugt wird. Vor allem aber wird die Warmluft in der Jahres-Übergangszeit und in der Winterzeit in die Warmluft-Blech-Kanalheizungen, eingespeist, die Kaltluft im Sommer. Der Wärmebedarf meist großer, gewerblicher Gebäude-Nutzflächen, die im Regelfall mit solchen Warmluft/Klimaluft-Blechkanälen ausgestattet sind, wird ganz oder teilweise gedeckt. Es ist eine beachtliche Wärmekosten/Klimatisierungskosten-Erspamis und somit Energieeinsparung damit verbunden.

Durch einen technischen Prozess kann aus der abgesaugten Warmluft Kaltluft zur Raumklimatisierung erzeugt werden. Diese wird im Sommer in die gleichen Lüftungskanäle eingeleitet wie die Warmluft zum Heizen in den kälteren Monaten.

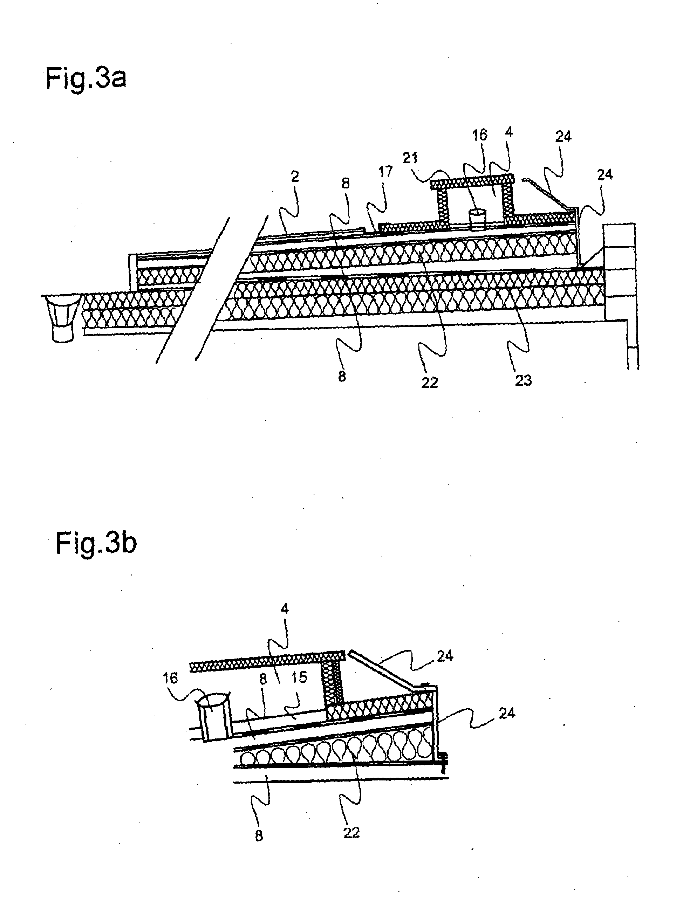

**Fig. 3a** zeigt, dass die erfindungsgemäße Vorrichtung ferner um Gefällekeile 23 ergänzt sein kann, die ein entsprechendes Mindestgefälle von 3 % bereitstellen, diese können aus Materialien wie Styropor, Holz oder Leichtmetall beschaffen sein. Die Gefällekeile werden auf der Folienschicht über den Hohlprofilen 8 angebracht, sie können gegebenenfalls durch eine dritte Schicht an Folie auf den darunter befindlichen angeordnet und damit verbunden werden. Der Dachgefällekeil 23, der die Ebene, auf der die Solarmodule angeordnet werden, gegebenenfalls sogar vollflächig bedecken mit Neigung versehen kann, kommt vorzugsweise dann zum Einsatz, wenn ein Dachgefälle von mindestens 3% sichergestellt werden soll, welches notwendig ist, um die Selbstreinigung der Solarmodule zu gewährleisten.

Die Neigung bzw. das Gefälle ist hierbei auf den Dachrand- und Gully-Anschlüsse bezogen. Bei der Dachkeilmontage des erfindungsgemäßen Komplettsystems kann wie folgt vorgegangen werden:

Eine ca. 50 mm hohe Hohlprofil-Unterkonstruktion mit einem bevorzugten, Achsmaß von 86 cm oder 43 cm wird mit Schweißbahnen oder Folien eingeklebt. Dies sichert die Funktion der Dach-Entwässerung wie bisher, da ein Abstand zur Dachhaut von ca. 5 cm entsteht bzw. besteht. Auf die Hohlprofile wird eine Lage von Styropor- oder anderen Dachgefällekeilen befestigt.

Diese Lage von Gefällekeilen wird wiederum im gleichen Achsabstand von 86 oder 43 cm mit 5 cm hohen Trapez-Hohlprofilen versehen, diese werden mit Schweißbahnen oder Folien belegt und wasserdicht mit der darunter befindlichen Folienschicht verbunden. Dabei wird der Kanal zur Abwärmeführung bereitgestellt. Die übereinander angeordneten Hohlprofile können eine Länge von 250 mm, eine Breite von 50 mm und eine Stärke von 1 mm haben, werden durch den dazwischen angeordneten Gefällekeil hindurch miteinander verschraubt

Auf die obere von den Hohlprofilen bereitgestellte Ebene werden mit Hilfe von Dichtbändern die monokristallinen Solarmodule, die Abmessungen von beispielsweise 80 cm x 160cm x 5 cm aufweisen können und eine Leistung von etwa 180 Watt bereitstellen können, oder alternativ Dünnschicht-Solarmodule, die Abmessungen von ca. 0,5 cm x 43 cm x 560 cm aufweisen, befestigt.

**Fig. 3b** zeigt im Detail, dass das Hohlprofil 8 mit einer Hohlprofil-Unterkonstruktion 22 verschraubt sein kann, dazwischen ist ein Gefällekeil angeordnet ferner ist gezeigt, dass der Abluft-Zuluftkanal 4 eine Abdeckplatte 15 aufweist, die als Boden dient; sie hat die Ansaugöffnungen 16, in welche vorliegend die Luftvolumenstromregler 16' eingesetzt sind. An der Kante, die zwischen dem sich auf dem nach oben erstreckenden Abluft-Zuluftkanal 4 und den Solarmodulen 2 bildet, kann zur Windableitung ein Windabweiserblech 24 angeordnet sein.

Die Ständerkonstruktion beziehungsweise die parallel auf dem Flachdach angeordneten Ständerprofilen, die konkav/ konvex längsgekantete Verankerungsprofile sein können, ist geeignet bzw. sind geeignet, auf einem Dach angeordnet zu werden, welches bereits eine Folienschicht wie etwa eine bituminöse Dachbahn trägt. Selbstverständlich kann, falls erforderlich, eine solche Folienschicht auch auf das Dach aufgebracht werden, wenn es beabsichtigt ist, die Ständerkonstruktion auf dem Dach anzubringen. Die Verankerung der Ständerkonstruktion bzw. der Ständerprofile auf dem Dach kann mittels Verschweißung einerzweiten Folienschicht, die vorteilhaft auch eine bituminöse Dachbahn sein kann erfolgen, wobei Verankerungselemente für die Ständerkonstruktlon zwischen der ersten und der zweiten Folienschicht ortsfest auf dem Dach positioniert und eingeschweißt werden.

Die erfindungsgemäßen Solarmodulrahmen, die verwendetwerden können, können an zumindest an einem Abschnitt eine Ausnehmung aufweisen, die geeignet ist, Regen- und Tauwasser vollständig ablaufen zu lassen. Dies wird unterstützt, wenn die Solarmodulrahmen mittels der Stufentrapezhohlprofile oder Gefällekeile geneigt gelagert sind. Der Abschnitt des Solarmodulrahmens sollte mit der Ausnehmung an einem tiefsten Punkt angeordnet sein.

Zusätzlich können Verankerungsprofile, die als tragende Elemente der Aufständerung auf dem Dach angeordnet werden, konvex oder konkav längsgekantet sein, so dass entsprechend ihrer Anordnung zueinander eine geschickte Möglichkeit zur Wasserabführung geschaffen ist. Insbesondere im Winter, wenn die Betriebsrichtung der Solarmodule etwa zum Abschmelzen von Schnee umgedreht genutzt wird, kann Schmelzwasser über die konkav gekanteten Profile abgeführt werden. Diese sind als System derart miteinander verbunden, dass eine Abfuhr des Wassers bis in eine Regenrinne oder einen Gully am Dach erfolgt. Ein solcher Gully kann in seinem Abflussloch und in der Wasserzufuhr-Gefällerinne überdies mit einem handelsüblichen elektrisch betriebenen Wärmeschlauch ausgestattet sein, so dass ein Zufrieren des Zuflusses zuverlässig verhindert wird. Diese Ausgestaltung ist besonders vorteilhaft, durch die Abschmelzung von Schnee auf dem Solarsystem eine Erhöhung der Dachbelastung vermieden werden kann: Durch Verwendung eines Wechselrichters ist belastung vermieden werden kann: Durch Verwendung eines Wechselrichters ist es möglich, die feinen stromleitenden Drähte in den Solarmodulen oder Wafern als Heizdrähte zu nutzen und "Rückstrom" einzuspeisen um einen Abschmetzvorgang einzuleiten.

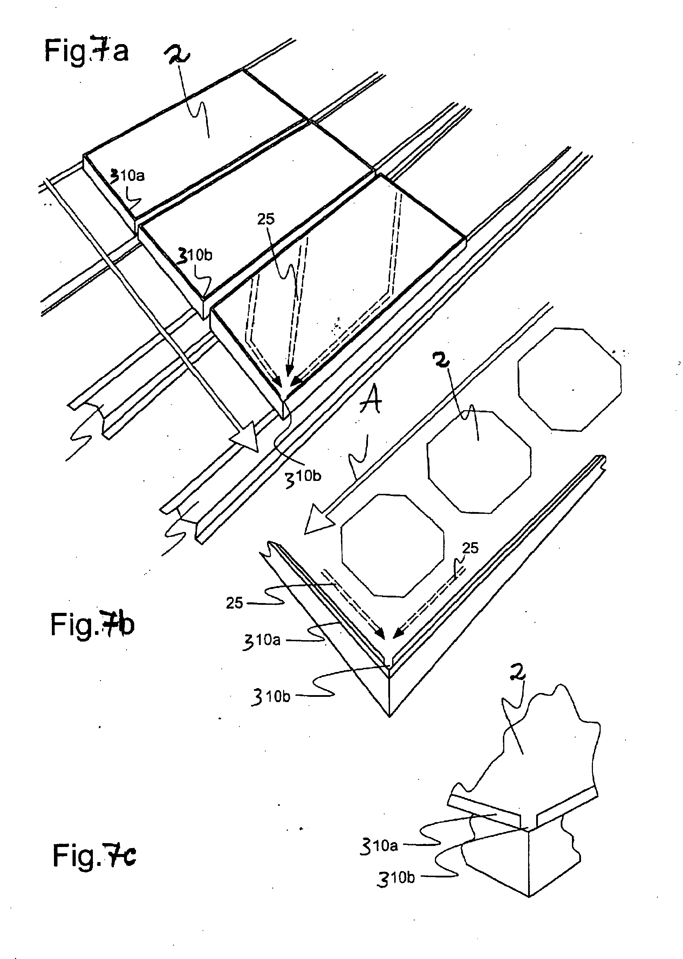

**Fig. 7b** zeigt einen Solarmodulrahmen 310a, der in einer Ecke eine Ausnehmung 310b aufweist, durch die Wasser von dem Solarmodul 2 abfließen kann. Dies wird durch Pfeile 25, die die Wasserfließrichtung darstellen, verdeutlicht. **Figur 3c** zeigt die Ausnehmung 310b im Solarmodulrahmen 310a vergrößert. Die Ausnehmung 310b des Solarmodulrahmens 310a weist eine Breite von etwa 10 mm auf. Natürlich kann die Breite auch andere Abmessungen aufweisen, so lange sie geeignet ist, Schmutzwasser abzuführen. Sie kann etwa von 3 mm bis 10 mm betragen.

In **Fig. 7a** ist eine Solarmodulanordnung gezeigt, bei der jeweils zwei ineinander gelegte Hohlprofile 8, die quer zur Richtung des Dachgefälles verlegt sind, die in Solarmodulrahmen 310a eingefasste Solarmodule 2 tragen. Zur Ausrichtung der Solarmodule 2, die hier vorteilhaft in optimaler Südrichtung erfolgt (Pfeil A in der Detailansicht aus **Fig.7b**) sind auf den Hohlprofilen 8 Aufständerungselemente angeordnet (in Figur 7a nicht dargestellt). Daher sind die Solarmodulrahmen 310a sowohl in Richtung des Dachgefälles als auch in optimaler Südrichtung A mit Hilfe des Aufständerungselements geneigt, wodurch eine Ecke des Solarmoduls zum tiefsten Punkt wird, an dem entsprechend vorteilhaft die Ausnehmung 310b angeordnet ist, um für optimalen Wasserablauf zu sorgen.

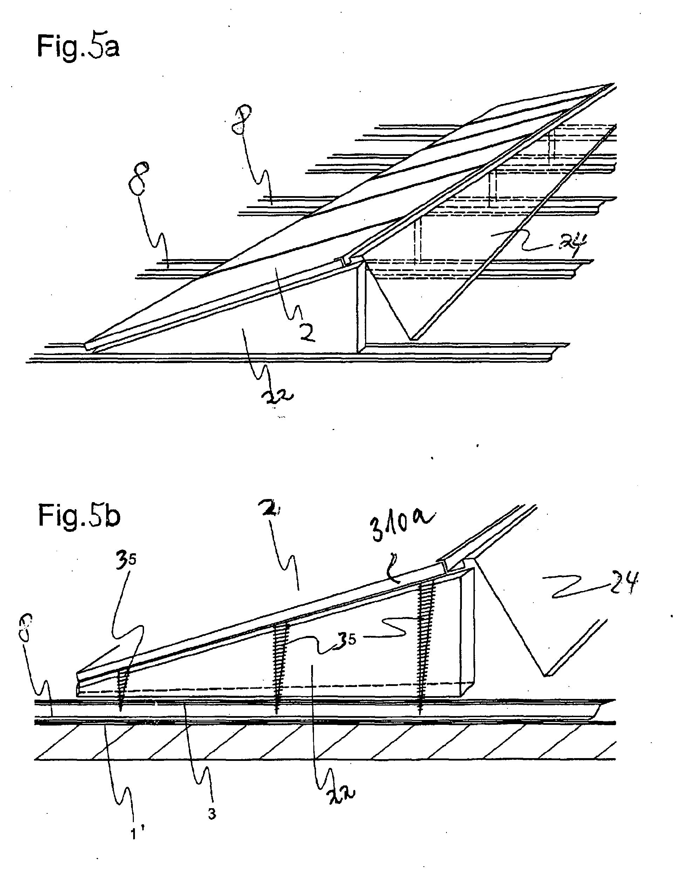

In **Fig. 5a** ist eine Anordnung der Solarmodule mit zwei Aufständerungselementen für ein Solarmodul 8 dargestellt. Jeweils ein Gefällekeil 22 ist auf einem Hohlprofil 8 angeordnet. Die Hohlprofil 8 und damit auch die Gefällekeile 22 sind parallel in einem Abstand, der einer Breite eines Solarmodulrahmens 310a entspricht, angeordnet, so dass jeweils zwei benachbarte Gefällekeile 22 ein Solarmodul 2 tragen. **Fig. 5a** zeigt ein zum Schutz vor Witterungseinflüssen, vor allem zum Schutz vor Wind, beziehungsweise Sturmböen, an der Rückseite der Solarmodule und des Gefällekeils 22 angeordnetes als Windabweiserblech 24 dienendes Multifunktionsprofil, das gleichzeitig als Firstprofilelement sowie Windableitblech fungiert. In **Fig. 5b** ist die Befestigung des Gefällekeils 22 mittels Schrauben 35 in dem Verankerungshohlprofil verdeutlicht.

Der Gefällekeil 22 stellt für das Solarmodul eine Neigung von 15 % bereit. Selbstverständlich weiß der Fachmann, dass die Neigung auch anders gewählt werden kann, eine Neigung im Bereich von 4 bis 15%, besonders von 10 % ist jedoch vorteilhaft.

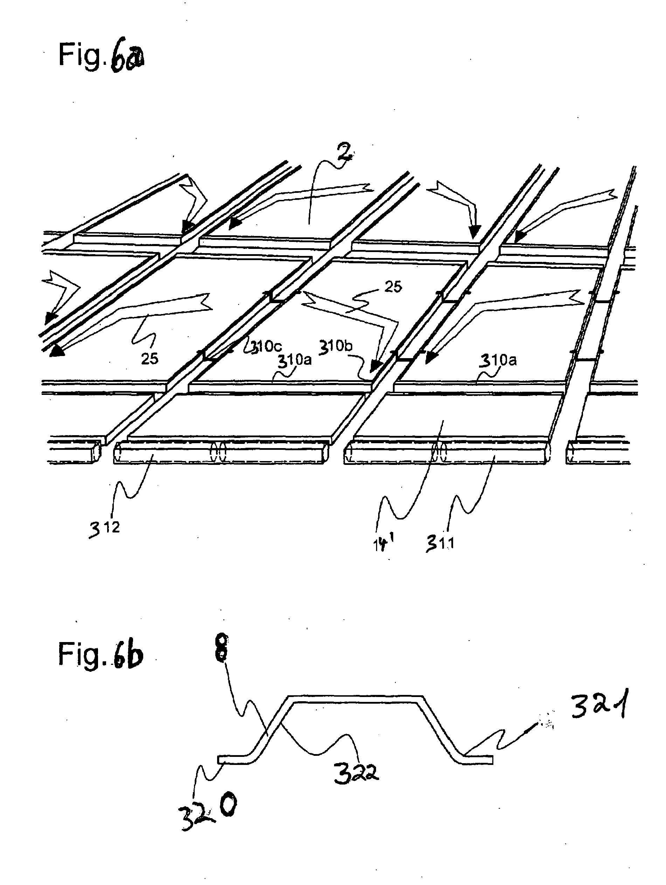

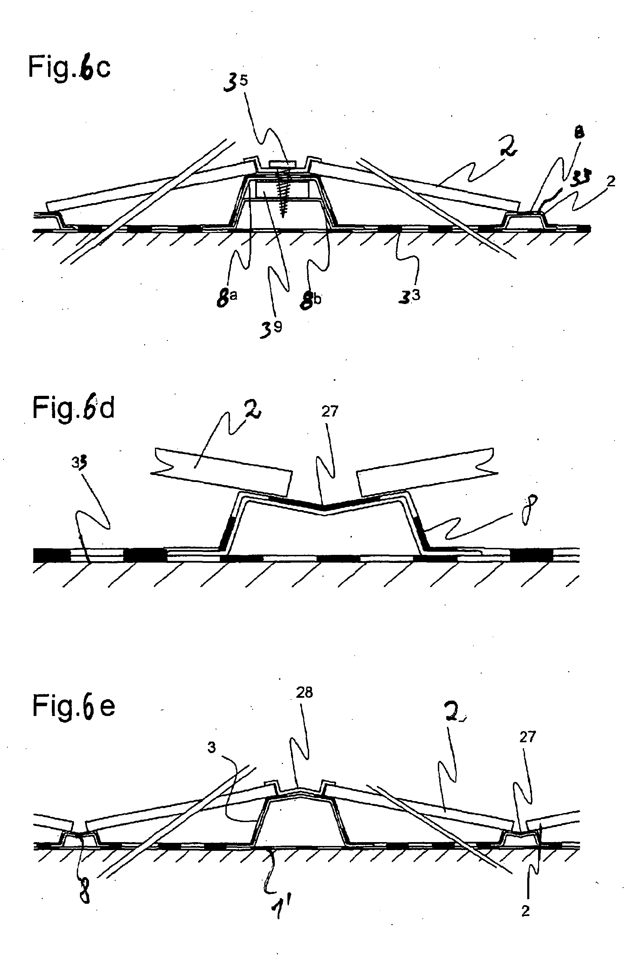

Die Hohlprofile 8 können senkrecht zum Dachgefälle verlegt werden, wie die Wasserfließrichtung In **Fig. 6a** verdeutlicht. Die Hohlprofile 8 können auch eine Kombination aus jeweils einem oberen Hohlprofil 8a und einem unteren Hohlprofil 8b, die beide unter einer Schweißbahn 33 verlegt sind (**Fig. 6c**) sein. Für die Solarmodulanordnung aus **Fig. 6a** wird nun bei jedem zweiten Hohlprofil 8 zwischen dem oberen Hohlprofil 8a und dem unteren Hohlprofil 8bein Quergefälle-Abstandsprofil 39 eingearbeitet, siehe **Figur 6c****.** Selbiges ist vorliegend mittels einer Schraube 35 und einem entsprechenden Befestigungsprofil (nicht gez.) gesichert.

Alternierend angeordnete Hohlprofile können U- oder V-förmig 27 gekantet sein, siehe **Fig. 6d**, oder auch nach außen gewölbt, um Wasser abzuführen.

Dadurch kann eine Zick-Zack-Anordnung der Solarmodule erhalten werden, wie **Fig. 6e** deutlich macht, wodurch zusammen mit der Dachneigung sich abwechselnd der tiefste Punkt links unten beziehungsweise rechts unten am Solarmodulrahmen 310a befindet, wo sich folglich auch die Ausnehmung 310b befindet.

Der Querschnitt des Hohlprofils 8, hier mit Trapezquerschnitt, ist in **Fig. 6b** gezeigt und stellt deutlich die im Radius ausgebildeten Ecken 321, die als Schräge ausgebildeten Seiten 322 und die Flansche 320.

Die Alternative für ein Hohlprofil 8 mit V-Kantung 27 zeigt **Fig.** 6d: Hier ist eine konkave, respektive V-förmige Kantung 27 in das Verankerungsprofil 8, das unter einer Schweißbahn 33 liegt, eingebracht. Von den Solarmodulen 2 abfließendes Wasser wird daher vorteilhaft in der mit Schweißbahn 33 abgedichteten V- oder U-förmlgen Vertiefung des Verankerungsprofils aufgenommen und abgeführt.

Auch in **Fig. 6e** ist gezeigt, dass das jeweils tiefer liegende VerankerungsHohlprofil 8 zweier ein Solarmodul 2 tragender Hohlprofile 8 eine Vertiefung aufweisen kann, die etwa V- oder U-förmig ist und die eine ausgezeichnete Wasserablaufrinne bereitstellt. Im Gegensatz hierzu ist das höher liegende Verankerungsprofil 2 mit einer konvexen Auswölbung, bzw. mit einer Dach-förmigen Vertiefung 28, die sich nach außen wölbt, ausgestattet, so dass hier Wasser und Schnee optimal abgeführt wird. Entsprechend der Anordnung kann das im Winter abfließende Tauwasser genau so wie Regenwasser im Sommer über diese Vertiefungen bis hin zur Regenrinne oder in einen Gully am Dach abgeführt werden.

Dies ist besonders vorteilhaft bei aufliegender Schneelast, wenn der Solargenerator mit Wechselstrom betrieben wird und seine Nutzungsrichtung invertiert werden kann, also die Solarmodule beheizt werden können, so dass drückende Schneelast abgeführt und das entstehende Tauwasser ablaufen gelassen wird. Um erneutes Einfrieren zu Verhindern, kann die Regenrinne bzw. der Abfluss am Dach mit einem handelsüblichen Warmschlauch ausgestattet werden.

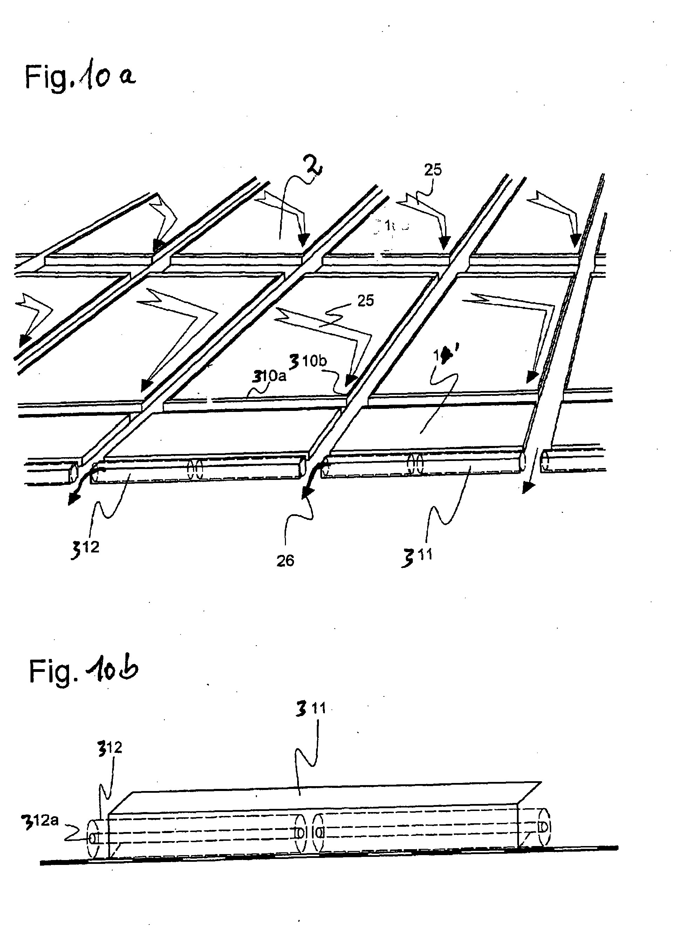

Die Solarmodule 2 sind in **Fig. 10a** in einer Längsrichtung mit Befestigungsprofilen dichtend an den Hohlprofilen 8 befestigt, und in einer Querrichtung senkrecht zu den Hohlprofilen 8 bilden die Befestigungsprofile einen dichtenden Abschluss zwischen zwei benachbarten Solarmodulen 2. Für einen Randabschluss sorgt ein Abschlusselement 15, das vorliegend ein Metall/PU-Kern/Metall-Sandwichelement ist. Hieran ist ein durch PU-Schaum-Rundrollen 312 wärmeisolierendes Verschlussblech 311 angeordnet. Damit wird unter den Solarmodulen durch die Gesamtanordnung ein Stauraum fürwarme Luft- im Fall der Schneeabschmelze - oder Kalte Luft - im Fall der Hinterkühlung der Solarmodule geschaffen.

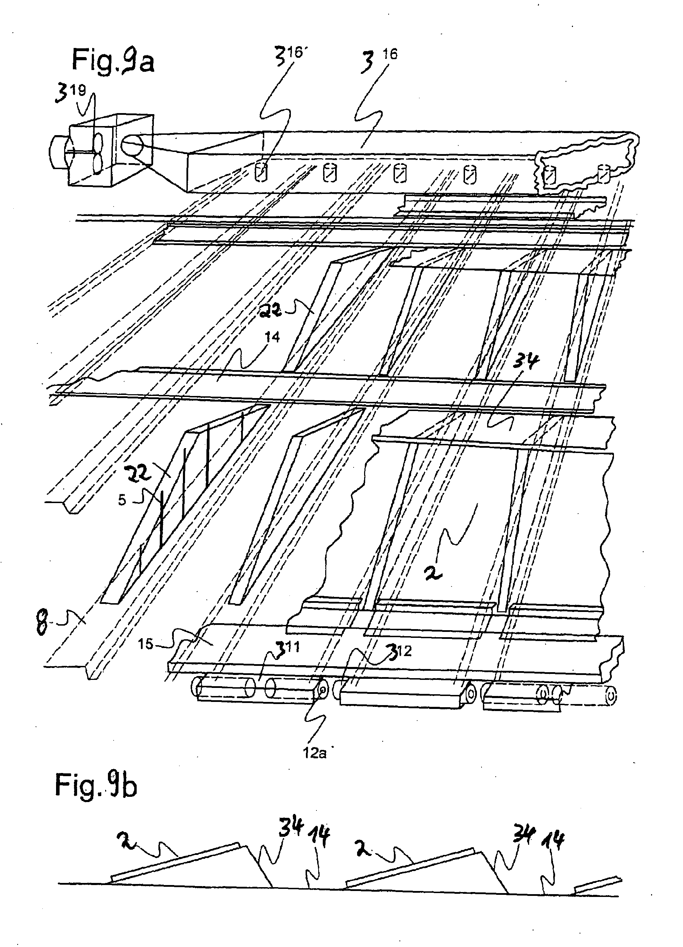

Diese geschlossen dichtende Anordnung kann also vorteilhaft dazu dienen, eine Temperierung des unter den Solarmodulen 2 quasi abgeschlossenen Raums, der dann über den Ventilator, siehe **Fig. 9a****,** im Firstkanal mit Umgebungsluft in Kontakt gebracht werden kann, zu ermöglichen. Diese Kontaktierung erfolgt über einen auf dem Dachfirst angeordneten Abluft-Zuluftkanal 316, der über mehrere LuftVolumenstromregler 16', 316' je nach Witterungsbedingungen im Winter warme Luft dem Raum unter den Solarmodule 2 mittels eines Ventilators 319 zuführt - wodurch vorteilhaft etwa Schnee und Eis auf dem Dach abgeschmolzen werden können - oder im Sommer die gestaute Warmluft unter den Solarmodulen abführt. Die Bezeichnung "Ventilator" umfasst dabei sämtliche Vorrichtungen zur Luftstromzufuhr/-abfuhr, wie beispielsweise Axialventilatoren, Radialventilatoren, Rohrventilatoren sowie sämtliche denkbaren Gebläse.

Die Temperierung der geschlossen dichtenden Anordnung kann bei einer innen liegenden Entwässerung in einem anderen Ausführungsbeispiel auch über an den höher liegenden Attiken bei der Anordnung der erfindungsgemäßen Solar-Komplettsysteme auf Flachdächern angeordneten Abluft-Zuluftkanal erfolgen.

In **Figur 9a** sind die Solarmodule 2 mit Gefällekeilen 22 aufgeständert, von denen in der vorliegenden Anordnung auf jeweils einem Verankerungshohlprofil 8 zwei Gefällekeile 22 - hintereinander beabstandet angeordnet sind, um so zwei Reihen von Solarmodulen 2 auf der Dachfläche zu erhalten. Um einen geschlossenen Raum unter den Solarmodulen 2 zu erhalten, ist auf der den Solarmodulen 2 abgewandten Seite der Gefällekeile 22 jeweils eine Gefällekeilrückenverkleidung 34 angeordnet und der Abstand zur nächsten Solarmodulreihe, beziehungsweise den nächsten Gefällekeilen 22 mittels einerwaagerechten Abdeckung 14 abgeschlossen. Den Abschluss der Solarmodulanordnung bildet ein Abschlusselement 14', das vom Dachfirst, und somit dem Abluft-Zuluftkanal 316 abgewandt angeordnet ist, wobei das Abschlusselement 15 hier ein Metall/PU-Kern/Metall-Sandwichelement ist. Auch andere Abschlusselemente mit Dämmfunktion sind denkbar. An das Abschlusselement 15 schließen mehrere Verschlussbleche 11 an, die durch innen liegende PU-Schaum-Rundrollen 12 wärmeisolierend sind.

Grundsätzlich kann auch eine Vielzahl von Gefällekeilen hintereinanderangeordnet sein, um so mehrere Reihen von Solarmodulen auf der Dachfläche zu haben.

In **Figur 9b** ist in einer Querschnittsansicht eine Solarmodulanordnung mit drei hintereinander liegenden Solarmodulreihen gezeigt, wobei der Warm- oder Kaltluftstauraum in der Anordnung mit den Solarmodulen 2, den Gefällekeilrückenverkleidungen 34 sowie den waagerechten Abdeckungen 14 vorteilhaft erreicht wird.

In **Figur 10a** ist eine Solarmodulanordnung gezeigt, bei der die Solarmodule 2 mit Befestigungsprofilen dichtend angeordnet sind, wobei die Solarmodule 2 derart aufgeständert sind, dass sich eine Wasserfließrichtung wie gezeigt durch Pfeil 25 zur unteren rechten Ecke hin ergibt, wo sich die Ausnehmung 310b, respektive die Ausfräsung für den Wasserablauf befindet. Auch hier schließt ein Abschlusselement 15 die Solarmodulanordnung ab, und mehrere Verschlussbleche 311 sorgen über die innen liegenden PU-Schaum-Rundrollen 312 für eine zusätzliche Regelung der Luftzufuhr/- abfuhr, indem das Verschlussblech 311 verschiebbar ist, wie die Pfeile 26 andeuten.

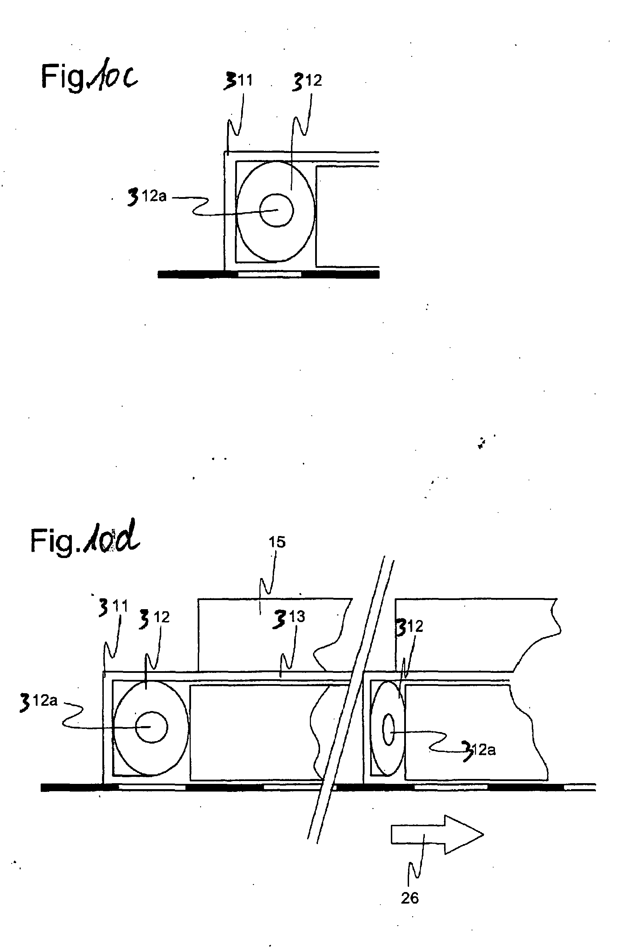

In **Figur 10b** sind die PU-Schaum-Rundrollen 312 in dem Verschlussblech 311 vergrößert dargestellt, so dass der durch die PU-Schaum-Rundrolle 312 hindurch führende Hohlraum 312a erkennbarist. **Figur 10c** zeigt dabei in einem Querschnitt, wie das Verschlussblech 311 mit der innen liegenden PU-Schaum-Rundrolle 312 an dem Hohlprofil (nicht gez.) zur Anordnung kommt. In **Figur 10c** ist der Hohlraum 312a der PU-Schaum-Rundrolle 312 geöffnet.

Indem das Verschlussblech 311 in Richtung des Hohlprofils 8 in den Verschlussblech-Verschiebeschlitz 313 geschobenwird, wie durch den Pfeil 26 in **Fig. 10d** dargestellt ist, wird die PU-Schaum-Rundrolle 312 zusammengedrückt, so dass ihr Hohlraum 312a im Querschnitt verkleinert wird, wodurch die Luftzufuhr/-abfuhrgedrosselt wird. Gleichzeitig dehnt sich die PU-Schaum-Rundrolle 312 in ihrer Längsrichtung aus, wenn das Verschlussblech 311 in Richtung der Hohlprofil 8 geschoben wird, so dass zwei benachbarte PU-Schaum-Rundrollen 312, die im entspannten Zustand einen Abstand zueinander aufweisen, dichtend miteinander anschließen (figurativ nicht dargestellt), wodurch eine bessere Wärmeisolierung erzielt wird.

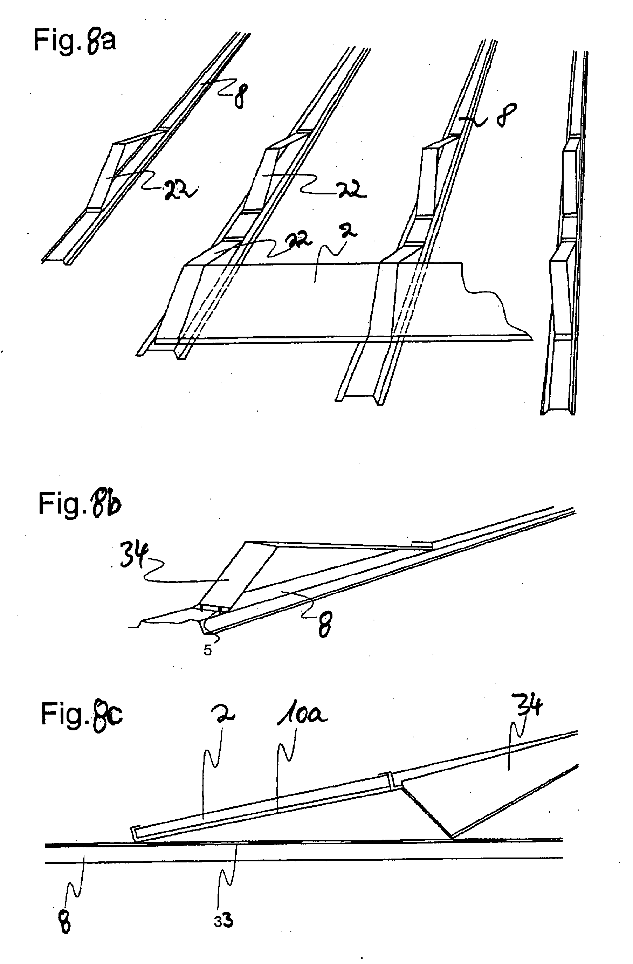

**Figuren 8a, 8b** und **8c** stellen eine Aufständerungsform der Solarmodule 2 mit Gefällebügeln 22 dar, die entsprechend den Gefällekeilen auf den Hohlprofilen 8 angeordnet sind. Hierbei sind die Solarmodule im Gegensatz zu den zuvor beschriebenen Ausführungsformen queraufgeständert, das heißt, die kürzere Seite derSolarmodule 2 liegt auf den Gefällebügeln 22 auf, der Abstand zwischen den Hohlprofilen 8 entspricht der Länge der Solarmodule 2. In **Fig. 8c** ist zur Rückseitenabdeckung des mittels eines auf einer Schweißbahn 33 angeordneten Gefällekeils 22 aufgeständerten Solarmoduls 2 ein Multifunktionsprofilblech 34 eingezeichnet, das die Aufgaben eines Firstprofilelements zur Befestigung des Solarmoduls und de Aufgaben eines Windableitblechs zusammen erfüllt. Die Maße für ein Multifunktionsprofilblech können etwa 80cm x160 cm x 5 cm betragen. Dieses Maß ist lediglich beispielhaft und keinesfalls beschränkend.

Das Solarmodul in der Solarmodulanordnung kann jedes beliebige Solarmodul sein, bevorzugt sind jedoch ein monokristallines Solarmodul oder ein Dünnschicht-Solarmodul.

Für die erfindungsgemäße Solarmodulanordnung in dem Solarerergie-Komplettsystem können die Solarmodule beispielsweise eine Breite im Bereich von 60,0 cm bis 100,0 cm aufweisen. Bevorzugt sind Breiten mit 80,0 cm. Geeignete Längen liegen im Bereich von 120,0 cm bis 180,0 cm, bevorzugt ist eine Länge von 160,0 cm. Die Dicke kann Im Bereich von 0 5 cm (bei Dünnschichtmodulen) bis 6,0 cm liegen, als besonders geeignet hat sich eine Dicke von 4,5 cm bis 5,0 cm erwiesen.

### BEZUGSZEICHENLISTE

| | |
|---|---|
| 1 | Dach |
| 1' | Dachhaut |
| 2 | Solarmodul |
| 3 | Metallunterkonstruktion |
| 4 | Abluft-/Zuluftkanal |
| 5 | Ventilator-Gehäuse |
| 6 | Ventilator |
| 7 | Zwischenraum |
| 8, 8' | Hohlprofil/Verankerungshohlprofil |
| 9 | Solarmodul-Befestigungsprofil |
| 10 | Elektrokabel |
| 10a | Solarmodulrahmen |
| 11 | Dachfirstlinie |
| 12 | Flansch |
| 13 | Kanal |
| 14 | Abdeckprofil/waagrechte Abdeckung |
| 14' | Abschlusselement (Sandwich) |
| 15 | Abdeckplatte |
| 16 | Ansaugöffnung |
| 16' | Luft-Votumenstromregler |
| 17 | Abluftstutzen |
| 19 | Kabelkanal |
| 20 | Kantenverstärkungswinkel |
| 21 | Schutzplatte |
| 22 | Gefällekeil/Aufständerungsrahmen |
| 23 | Hohlprofil-Unterkonstruktion |
| 24 | Windabweiserblech |
| 25 | Wasserfließrichtung |
| 26 | Verschieberichtung |
| 27 | V-förmige Kantung |
| 28 | Dach-förmige Auswölbung |
| 33 | Schweißbahn/Folie |
| 34 | Gefällerückenverkleidung |
| 35 | Schraube |
| 38 | Ausgleichsblech |
| 39 | Abstandsprofil |
| 310a | Solarmodulrahmen |
| 310b | Ausnehmung |
| 311 | Wärme isolierendes Verschlussblech |
| 312 | PU-Schaum-Rundrolle |
| 312a | Hohlraum |
| 313 | Verschlussblech-Verschiebeschlitz |
| 316 | Abluft-/Zuluftkanal |
| 319 | Ventilator |
| 320 | Flansch |
| 321 | Abgerundete Ecke |
| 322 | Abgeschrägte Seite |
| 323 | Dachgefälle |

## Patentansprüche

1. Solarenergie-Komplettsystem zur Anordnung auf einem Dach (1), mit einer Vielzahl von in Solarmodulrahmen (10a,310a) eingefassten Solarmodulen (2) und einer Haltekonstruktion für die Solarmodule (2) auf dem Dach, wobei die Solarmodulrahmen (310a,10a) auf der Haltekonstruktion angeordnet sind,
**dadurch gekennzeichnet, dass**
- die Haltekonstruktion eine Vielzahl von Hohlprofilen (8,8') mit zumindest einem seitlich angeformten Flansch (12,320) aufweist, wobei auf der Dachhaut (1') zumindest eine erste Schicht Folienmaterial angebracht ist, die mit zumindest einer zweiten, über den Hohlprofilen (8,8') angeordneten Schicht Folienmaterial adhäsiv, chemisch oder photochemisch verbunden ist, wodurch die Hohlprofile (8,8') auf dem Dach (1) ortsfest positioniert sind, und wobei die Hohlprofile (8,8') auf einer Dachhaut (1') des Daches (1) im Wesentlichen parallel und in einem solchen Abstand zueinander angeordnet sind, dass die Solarmodule (2) dichtend auf der Haltekonstruktion über zwei benachbarten Hohlprofilen (8,8') aufliegen und befestigt sind,
- zumindest ein Abluft-/Zuluftkanal (4,316) auf dem Dach (1), insbesondere auf dem Dachfirst, angeordnet ist, und
- eine Vielzahl von Kanälen (13) zumindest von jeweils einer Seitenwand zweier benachbarter Hohlprofile (8,8') und den darüber dichtend aneinander grenzend getragenen Solarmodulen (2) mit Solarmodulrahmen (310a,10a) auf dem Dach (1) und durch die Dachhaut (1') gebildet wird,
wobei sich die Kanäle (13) und die Hohlprofile (8,8') in den Abluft-/Zuluftkanal (4,316) hinein erstrecken,
und wobei eine Vorrichtung zur Abluftabsaugung und/oder zur Zuluftversorgung an dem Abluft-/Zuluftkanal (4,316) angeordnet ist, die geeignet ist, Luft aus den Kanälen (13) abzusaugen oder zuzuführen.

2. Solarenergie-Komplettsystem nach Anspruch 1, **dadurch gekennzeichnet, dass** das Hohlprofil (8,8') ein Querschnittsprofil
- eines regelmäßigen Trapezes (8)
- eines Stufentrapezes (8') aufweist.

3. Solarenergie-Komplettsystem nach Anspruch 1 oder 2, **dadurch gekennzeichnet, dass** In dem Abluft-/Zuluftkanal (4,316) ein oder mehrere Luftstromvolumen-Regler (16') angeordnet sind und die Luftstromvolumen-Regler (16') in operativer Verbindung mit der Vorrichtung zur Abluftabsaugung stehen.

4. Solarenergie-Komplettsystem nach zumindest einem der Ansprüche 1 bis 3, **dadurch gekennzeichnet, dass** die erste Schicht Folienmaterial und/oder die zweite Schicht Folienmaterial eine bituminöse Dachpappe oder eine Kunststofffolie, insbesondere eine selbstvernetzende, selbstklebende oder chemisch vernetzende Kunststofffolie ist.

5. Solarenergie-Komplettsystem nach zumindest einem der Ansprüche 1 bis 4, **dadurch gekennzeichnet, dass** die Vorrichtung zur Abluftabsaugung und/oder zur Zuluftversorgung an dem Abluft-/Zuluftkanal (4,316) ein Ventilator (6,319) ist.

6. Solarenergie-Komplettsystem nach zumindest einem der Ansprüche 1 bis 5, **dadurch gekennzeichnet, dass** ein Kabelkanalprofil (19), geeignet zur Aufnahme eines Elektrokabels (10) und/oder eines Solarmodul-Installationskabels entlang eines Hohlprofils (8,8') auf der zweiten Schicht Folienmaterial angeordnet, insbesondere verschraubt oder vernietet ist.

7. Solarenergie-Komplettsystem nach zumindest einem der Ansprüche 1 bis 6, **dadurch gekennzeichnet, dass** ein Solarmodul-Befestigungsprofil (9), insbesondere ein Solarmadul-Befestigungsprofil (9) mit einer Querschnittsform eines Hutes, über der zweiten Folienschicht auf einer Hohlprofiloberseite in einem Zwischenraum zwischen zwei sich gegenüberliegenden Solarmodulen (2) angeordnet ist.

8. Solarenergie-Komplettsystem nach Anspruch 7, **dadurch gekennzeichnet, dass** ein Abdeckprofil (14) mit einer C-Form oder einer U-Form eine Abdeckung des Solarmodul-Befestigungsprofils (9) bereitgestellt ist und aus Metall oder einem Hartku nststoff besteht.

9. Solarenergie-Komplettsystem nach zumindest einem der Ansprüche 7 oder 8 **dadurch gekennzeichnet, dass** das Solarmodul-Befestigungsprofil (9) und das Kabelkanal-Profil (19) zwischen zwei sich gegenüberliegenden Solarmodul-Längsseiten angeordnet sind.

10. Solarenergie-Komplettsystem nach zumindest einem der Ansprüche 8 oder 9,
**dadurch gekennzeichnet, dass** ein Abdichtmittel, insbesondere eine Abdichtungsschnur, in einem Spalt zwischen dem Solarmodul-Befestigungsprofil (9) und dem Solarmodul (2) dichtend angeordnet ist.

11. Solarenergie-Komplettsystem nach zumindest einem der vorstehenden Ansprüche, **dadurch gekennzeichnet, dass** in dem Abluft-/Zuluftkanal (4,316) auf den sich in den Abluft-/Zuluftkanal (4,316) hinein erstreckenden Kanälen (13) eine Abdeckplatte (15) mit Ansaugöffnungen (16) angeordnet ist.

12. Solarenergle-Komplettsystem nach zumindest einem der vorstehenden Ansprüche, **dadurch gekennzeichnet, dass** das Solarmodul (2) ein monokristallines Solarmodul, insbesondere ein monokristallines Solarmodul (2) mit einer:
Breite im Bereich von 60,0 cm bis 100,0 cm, vorzugsweise von 80,0 cm,
Länge im Bereich von 120,0 cm bis 180,0 cm, vorzugsweise von 160,0 cm,
Dicke im Bereich von 3,0 cm bis 6,0 cm, vorzugsweise von 4,5 cm bis 5,0 cm, oder
ein Dünnschichtsolarmodul, insbesondere ein Dünnschichtsolarmodul mit einer:
Breite von 43 cm bis 85 cm, vorzugsweise 80 cm,
Länge von 280 bis 580 cm, vorzugsweise 560 cm,
Dicke von 0,5 cm
ist.

13. Solarenergie-Komplettsystem nach zumindest einem der vorstehenden Ansprüche, **dadurch gekennzeichnet, dass** quer zu den Hohlprofilen (8,8') Befestigungs-Klemmprofile (7) mit Querschnittsprofil eines Hutes oder Solarmodul-Befestigungsprofile (9), Insbesondere mit Kabelkanal-Unterprofilen (9) oder mit Kabelkanal-Aluminium-Unterprofilen angeordnet sind.

14. Soiarenergie-Komplettsystem nach zumindest einem der vorstehenden Ansprüche, **dadurch gekennzeichnet, dass** ein wasserführendes System unter den Kanälen (13) und/oder den Hohlprofilen (8,8') angeordnet ist und Schläuche oder Leitungen umfasst, die zur Wassertemperierung mittels Solarenergie geeignet sind.

15. Solarenergie-Komplettsystem nach zumindest einem der vorstehenden Ansprüche, **dadurch gekennzeichnet, dass** die Haltekonstruktion eine Ständerkonstruktion ur Bereitstellung einer Neigung der darauf angeordneten Solarmodulrahmen (310a,10a) ist, und wobei die Ständerkonstruktion eine Mehrzahl von Gefällekeilen (22) oder Gefällebügeln zur Bereitstellung eines Gefälles von 2 bis 20 %, vorzugsweise von 4 bis 15 %, insbesondere von 3 %, und wobei die Gefällekeile (22) oder Gefällebügel auf den Hohlprofilen (8) angeordnet sind.

16. Solarenergie-Komplettsystem nach zumindest einem der vorstehenden Ansprüche, **dadurch gekennzeichnet, dass** der Solarmodulrahmen (310a,10a) an zumindest einem Abschnitt des Solarmodulrahmens (310a,10a) eine Ausnehmung (10b) als Ablauf für Flüssigkeit aufweist, wobei der zumindest eine Abschnitt des Solarmodulrahmens (310a,10a) mit der Ausnehmung (10b) an einem tiefsten Punkt des Solarmodulrahmens (310a, 10a) liegt.

17. Solarenergie-Komplettsystem nach zumindest einem der vorstehenden Ansprüche, **dadurch gekennzeichnet, dass** der zumindest eine Abschnitt des Solarmodulrahmens (10a,310a) mit der Ausnehmung (10b) an dem tiefsten Punkt des Solarmodulrahmens (10a,310a) angeordnet ist, und dass die Ausnehmung (10b) eine Breite von 3 mm bis 30 mm, vorzugsweise von 3 mm bis 10 mm, am meisten bevorzugt von bis 5 mm, aufweist und dass der Abschnitt des Solarmodulrahmens (310a,10a), an dem die Ausnehmung (10b) angeordnet ist, eine Ecke des Solarmodulrahmens (310a,10a) ist.

18. Solarenergie-Komplettsystem nach zumindest einem der vorstehenden Ansprüche, **dadurch gekennzeichnet, dass** das Hohlprofil (8) eine Sandwichkonstruktion aus zumindest zwei der Komponenten: oberes Hohlprofil (8a), unteres Hohlprofil (8b), Abstandselement (39), ist.

19. Solarenergie-Komplettsystem nach zumindest einem der vorstehenden Ansprüche, **dadurch gekennzeichnet, dass** das Hohlprofil (8) eine Vertiefung, vorzugsweise eine Vertiefung mit V- oder mit U-förmigem Profil entlang zumindest eines Teils seiner Länge, oder eine Auswölbung, vorzugsweise eine dachförmige Auswölbung, entlang zumindest eines Teils seiner Länge aufweist.

20. Solarenergle-Komplettsystem nach zumindest einem der vorstehenden Ansprüche, **dadurch gekennzeichnet, dass** die aufgeständerten Solarmodulrahmen (310a,10a) mit dem auf dem Dachfirst angeordneten Abluft-/Zuluftkanal (16, 316), und mit einem Abschlusselement (15), das an einer dem Dachfirst gegenüberliegenden Seite der Solarmodulanordnung angeordnet ist, und mit einem Verschlussblech (311) einen Speicherraum bilden.

21. Solarenergie-Komplettsystem nach Anspruch 20, **dadurch gekennzeichnet, dass** der Speicherraum
- eine Gefällekeilrückenverrkleidung (34), die an einer dem auf dem Gefällekeil/- bügel (22) angeordneten Solarmodulrahmen (310a,10a) abgewandten Seite des Gefällekeilst-bügels (22) angeordnet ist, und/oder
- eine waagerechte Abdeckung (14), die den Abstand zwischen zwei auf einem Hohlprofil (8) beabstandet angeordneten Gefällekeilen/-bügeln (22) abdeckt, und/oder
- ein Abschlusselement (15), das an einer dem Dachfirst gegenüberliegenden Seite der Solarmodulanordnung angeordnet ist, umfasst.

22. Solarenergle-Komplettsystem nach Anspruch 20 oder 21, **dadurch gekennzeichnet, dass** das Abschlusselement (14') an dem Verschlussblech (311) angeordnet ist, wobei zumindest ein Dämmmaterial, insbesondere eine PU-Schaum-Rundrolle (312) oder eine PU-Schaum-Rundrolle (312) mit einem Hohlraum, von dem Verschlussblech (311) umgeben ist.

23. Solarenergie-Komplettsystem nach Anspruch 22, **dadurch gekennzeichnet, dass** das Verschlussblech (311) in einem Verschlussblech-Verschlebeschlitz (313), der zwischen den Hohlprofilen (2) und dem Abschlusselement (15) angeordnet ist, verschiebbar ist.
